(19) **Europäisches Patentamt**
**European Patent Office**
**Office européen des brevets**

(11) **EP 3 733 598 A1**

(12) **EUROPEAN PATENT APPLICATION**

(43) Date of publication:
**04.11.2020 Bulletin 2020/45**

(51) Int Cl.:
**C01B 32/00** (2017.01)     **C01B 32/05** (2017.01)
**H01M 4/583** (2010.01)

(21) Application number: **19171966.5**

(22) Date of filing: **30.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Heraeus Battery Technology GmbH
63450 Hanau (DE)**

(72) Inventors:
  • **Michaud-Bernlocher, Julie
    63450 Hanau (DE)**
  • **Kuhn, Andreas
    63450 Hanau (DE)**

• **Weingarth, Daniel
  63110 Rodgau (DE)**
• **Klose, Markus
  04179 Leipzig (DE)**
• **Osinga, Stephan
  63450 Hanau (DE)**
• **Becker, Jörg
  63450 Hanau (DE)**
• **Ramirez Castro, Claudia
  63739 Aschaffenburg (DE)**
• **Samuelis, Dominik
  63450 Hanau (DE)**

(74) Representative: **Herzog IP Patentanwalts GmbH
Immermannstraße 40
40210 Düsseldorf (DE)**

(54) **A FORMULATION COMPRISING A GRAPHITIZABLE AND A NON-GRAPHITIZABLE CARBON SOURCE**

(57)     The present invention relates to a formulation comprising a graphitizable carbon source and a non-graphitizable carbon source. The invention further relates to a process for the preparation of a porous carbon material, a porous carbon material, a device comprising a porous carbon material and a use of a porous carbon material.

The present invention relates to a formulation comprising:
a. A graphitizable carbon source;
b. A non-graphitizable carbon source; and
c. An amphiphilic species.

Figure 1

EP 3 733 598 A1

## Description

<u>Field of the Invention</u>

The present invention relates to a formulation comprising a graphitizable carbon source and a non-graphitizable carbon source. The invention further relates to a process for the preparation of a porous carbon material, a porous carbon material, a device comprising a porous carbon material and a use of a porous carbon material.

<u>Background</u>

There exists a demand for porous carbon materials, especially for use in applications where both electrical conductivity and material permeability are required in the same substance. Such applications are for instance ion transfer cells, in which an electrode material interacts with charge carriers at a solid-liquid boundary.

A porous carbon material which is known in the prior art is carbon black. Carbon black is produced by incomplete combustion of heavy petroleum products such as FCC tar, coal tar, ethylene cracking tar, and a small amount from vegetable oil. Such a process for the production of carbon black is for example disclosed in US 7,655,209 B2. The applications of porous carbon are generally based on the properties of the pore structure. Known applications are electrodes, such as in lithium ion cells in which simultaneous transport of ions and electrons through the electrode material is required; catalysts, in which a high active surface area and pore accessibility are required; and fuel cells, in which transport of fuel and electrical conductivity are required.

Processes for producing a porous carbon material using a template acting as negative to shape the carbon are known in the prior art. Therein, the carbon material is characterised by a pore structure which is substantially predetermined by the structure of the template material. The template can for example be made from a silicon oxide. A process for producing a silicon oxide template known in the prior art is the so-called sol-gel process. The sol-gel route to preparation of silicon oxide is well known to the skilled person. For example, producing a monolithic silica body via the sol gel process is described in US 6,514,454 B1.

One method for preparing a porous carbon material without using a solid template is described in US 2005/214539 A1. There, a prolonged polymerisation step is required prior to firing.

One method for preparing a porous carbon material using both graphitizable and non-graphitizable carbon sources is presented in European patent document EP 2,899,158 B1.

There persists a need to provide improved methods for making porous carbon materials, in particular by a polymerisation type process without employing a solid template and with a short polymerisation step. There also exists a need for porous carbon materials with improved properties.

<u>Summary of the invention</u>

Generally, it is an object of the present invention to at least partly overcome a disadvantage arising from the prior art.

It is an object of the present invention to provide a process for preparing a porous carbon material, wherein the process has a reduced duration.

It is an object of the present invention to provide a process for preparing a porous carbon material, wherein the process involves less steps.

It is an object of the present invention to provide a process for preparing a porous carbon material, wherein the porous carbon material has improved properties.

It is an object of the present invention to provide a process for preparing a porous carbon material, wherein the porous carbon material has a modal pore size in the macro-pore range.

It is an object of the present invention to provide a process for preparing a porous carbon material, wherein the porous carbon material has a modal pore size above 50 nm.

It is a particular object of the present invention to provide a process for preparing a porous carbon material which does not require a cross-linking agent.

It is a particular object of the present invention to provide a process for preparing a porous carbon material which is more environmentally friendly.

It is a particular object of the invention to provide a process for preparing a porous carbon material without the need for an extensive mixing step.

It is a particular object of the invention to provide a process for preparing a porous carbon material having improved ion transport.

It is a particular object of the invention to provide a process for preparing a porous carbon material having a tuneable BET specific surface area.

It is a particular object of the invention to provide a process for preparing a porous carbon material having improved processing characteristics.

It is a particular object of the invention to provide a process for preparing a porous carbon material having an increased electrical conductivity.

It is an object of the invention to provide a process for the preparation of a porous carbon product with lower impurity concentration.

It is an object of the invention to provide a Li-ion cell with higher calendar lifetime.

It is an object of the invention to provide a Li-ion cell with higher cycle lifetime.

It is an object of the invention to provide a Li-ion cell with reduced defect rate.

It is an object of the invention to provide a Li-ion cell with an improved low-rate response.

It is an object of the invention to provide a Li-ion cell with an improved high-rate response.

It is an object of the invention to provide a Li-ion cell with a reduced first cycle loss.

It is an object of the invention to provide a Li-ion cell with an increased energy density.

It is an object of the invention to provide a slurry, preferably a slurry for a Li ion battery electrode, having an increased solid content and, preferably with good viscosity properties.

A contribution to achieving at least one of the above objects is made by the independent claims. The dependent claims provide preferred embodiments of the present invention which also serve to solve at least one of the above-mentioned objects.

|1| A formulation comprising:

> a. A graphitizable carbon source, its content preferably being at least 1 wt. % based on the total weight of the formulation;
> b. A non-graphitizable carbon source, its content preferably being at least 19 wt. % based on the total weight of the formulation; and
> c. An amphiphilic species, its content preferably being at least 23 wt. %.

In one aspect, the formulation has a $CO_2$ emission over the range from 250 to 400 °C on heating from 25°C at a rate of 15°C/min under helium corresponding to at least 1 wt. % based on the total weight of the formulation, preferably at least 5 wt. %, more preferably at least 10 wt. %. The heating is preferably performed according to the first TGA test method presented herein. The $CO_2$ emission is preferably associated with, more preferably primarily attributable to, the amphiphilic species. The amphiphilic species preferably contributes more than 50 wt. % to the $CO_2$ emission.

In one aspect, the formulation has a feature in the range from 250 to 400°C on heating from 25°C at a rate of 15°C/min under helium. The heating is preferably performed according to the first TGA test method presented herein. The feature preferably corresponds to at least 1 wt. % based on the total weight of the formulation, preferably at least 5 wt. %, more preferably at least 10 wt. %. The feature is preferably associated with, more preferably primarily attributable to, the amphiphilic species. The amphiphilic species preferably contributes more than 50 wt. % to the feature. The feature is preferably attributable to $CO_2$ emission.

In one aspect, the formulation has a hydrocarbon emission over the range from 300 to 500°C on heating from 25°C at a rate of 15°C/min under helium, corresponding to at least 1 wt. % based on the total weight of the formulation, preferably at least 5 wt. %, more preferably at least 10 wt. %. The heating is preferably performed according to the first TGA test method presented herein. The hydrocarbon emission is preferably attributable to the non-graphitizable carbon source.

In one aspect, the formulation has an aldehyde emission, preferably a formaldehyde emission over the range from 300 to 500°C on heating from 25°C at a rate of 15°C/min under helium, corresponding to at least 1 wt. % based on the total weight of the formulation, preferably at least 5 wt. %, more preferably at least 10 wt. %. The heating is preferably performed according to the first TGA test method presented herein. The aldehyde emission is preferably attributable to the non-graphitizable carbon source.

In one aspect, the formulation has a phenolic emission, preferably a phenol emission or resorcinol emission or both, over the range from 300 to 500°C on heating from 25°C at a rate of 15°C/min under helium, corresponding to at least 1 wt. % based on the total weight of the formulation, preferably at least 5 wt. %, more preferably at least 10 wt. %. The heating is preferably performed according to the first TGA test method presented herein. The phenolic emission is preferably attributable to the non-graphitizable carbon source.

In one aspect, the formulation has a feature in the range from 300 to 500°C on heating from 25°C at a rate of 15°C/min under helium. The heating is preferably performed according to the first TGA test method presented herein. The feature preferably corresponds to at least 1 wt. % based on the total weight of the formulation, preferably at least 5 wt. %, more preferably at least 10 wt. %. The feature is preferably attributable to the non-graphitizable carbon source. The feature is preferably attributable to hydrocarbon emission, phenolic emission, aldehyde emission or a combination thereof.

In one aspect, the formulation has a hydrocarbon emission over the range from above 400 to 700 °C on heating from 25°C at a rate of 15°C/min under helium, corresponding to at least 1 wt. % based on the total weight of the formulation, preferably at least 3 wt. %, more preferably at least 5 wt. %. The heating is preferably performed according to the first TGA test method presented herein. The hydrocarbon emission is preferably attributable to the graphitizable carbon source.

In one aspect, the formulation has an emission of one or more compounds each comprising linked aromatic rings over the range from above 400 to 700 °C on heating from 25°C at a rate of 15°C/min under helium, corresponding to at least 1 wt. % based on the total weight of the formulation, preferably at least 3 wt. %, more preferably at least 5 wt. %. The heating is preferably performed according to the first TGA test method presented herein. Preferred compounds comprising linked aromatic rings are naphthalene, derivatives thereof, anthracene and derivatives thereof. The emission is preferably attributable to the graphitizable carbon source.

In one aspect, the formulation has a feature in the range from above 400 to 700°C on heating from 25°C at a rate of 15°C/min under helium. The heating is preferably performed according to the first TGA test method presented herein. The feature preferably corresponds to at least 1 wt. % based on the total weight of the formulation, preferably at least 3 wt. %, more preferably at least 5 wt. %. The feature is preferably attributable to the graphitizable carbon source. The feature is preferably attributable to hydrocarbon emission. The feature is preferably attributable to one or more compounds each comprising linked aromatic rings, preferably one or more selected from the group consisting of: naphthalene, derivatives thereof, anthracene and derivatives thereof.

The amphiphilic species is preferably characterised by a $CO_2$ emission over the range from 250 to 400 °C on heating the formulation from 25°C at a rate of 15°C/min under helium, corresponding to at least 1 wt. % based on the total weight of the formulation, preferably at least 5 wt. %, more preferably at least 10 wt. %. The heating is preferably performed according to the first TGA test method presented herein.

The amphiphilic species is preferably characterised by a feature in the range from 250 to 400°C on heating from 25°C at a rate of 15°C/min under helium. The heating is preferably performed according to the first TGA test method presented herein. The feature preferably corresponds to at least 1 wt. % based on the total weight of the formulation, preferably at least 5 wt. %, more preferably at least 10 wt. %. The feature is preferably attributable to $CO_2$ emission.

The non-graphitizable carbon source is preferably characterised by a hydrocarbon emission, a phenolic emission, an aldehyde emission, or a combination thereof, over the range from 300 to 500°C on heating from 25°C at a rate of 15°C/min under helium, corresponding to at least 1 wt. % based on the total weight of the formulation, preferably at least 5 wt. %, more preferably at least 10 wt. %. The heating is preferably performed according to the first TGA test method presented herein.

The non-graphitizable carbon source is preferably characterised by a feature in the range from 300 to 500°C on heating from 25°C at a rate of 15°C/min under helium. The heating is preferably performed according to the first TGA test method presented herein. The feature preferably corresponds to at least 1 wt. % based on the total weight of the formulation, preferably at least 5 wt. %, more preferably at least 10 wt. %. The feature is preferably attributable to hydrocarbon emission, phenolic emission, aldehyde emission, or a combination thereof.

The graphitizable carbon source is preferably characterised by a hydrocarbon emission over the range from above 400 to 700 °C on heating from 25°C at a rate of 15°C/min under helium, corresponding to at least 1 wt. % based on the total weight of the formulation, preferably at least 3 wt. %, more preferably at least 5 wt. %. The heating is preferably performed according to the first TGA test method presented herein. The hydrocarbon emission is preferably of one or more compounds each comprising linked aromatic rings, preferably one or more selected from the group consisting of: naphthalene, derivatives thereof, anthracene and derivatives thereof.

The graphitizable carbon source is preferably characterised by a feature in the range from above 400 to 700°C on heating from 25°C at a rate of 15°C/min under helium. The heating is preferably performed according to the first TGA test method presented herein. The feature preferably corresponds to at least 1 wt. % based on the total weight of the formulation, preferably at least 3 wt. %, more preferably at least 5 wt. %. The feature is preferably attributable to hydrocarbon emission, preferably of one or more compounds each comprising linked aromatic rings, preferably one or more selected from the group consisting of: naphthalene, derivatives thereof, anthracene and derivatives thereof.

In one aspect, the formulation after holding for 1 hour at 3000°C under argon at 500 Pa is graphitic, preferably having an XRD feature at 2theta in the range from 26 to 27, preferably at around 26.5. This is preferably established according to the X-ray crystallographic method_test method presented herein.

In one embodiment, the content of the graphitizable carbon source is at least 1 wt. %, preferably at least 2 wt. %, more preferably at least 5 wt. %, more preferably at least 8 wt. %, based on the total weight of the graphitizable carbon source, the non-graphitizable carbon source and the amphiphilic species.

In one embodiment, the content of the graphitizable carbon source is at most 30 wt. %, preferably at most 25 wt. %, more preferably at most 20 wt. %, more preferably at most 15 wt. %, based on the total weight of the graphitizable carbon source, the non-graphitizable carbon source and the amphiphilic species.

In one embodiment, the content of the graphitizable carbon source is in the range from 1 to 30 wt. %, preferably in the range from 2 to 25 wt. %, more preferably in the range from 5 to 20 wt. %, more preferably in the range from 8 to 15 wt. %, based on the total weight of the graphitizable carbon source, the non-graphitizable carbon source and the amphiphilic species.

In one embodiment, the content of the non-graphitizable carbon source is at least 25 wt. %, preferably at least 28 wt. %, more preferably at least 31 wt. %, more preferably at least 34 wt. %, based on the total weight of the graphitizable carbon source, the non-graphitizable carbon source and the amphiphilic species.

In one embodiment, the content of the non-graphitizable carbon source is at most 60 wt. %, preferably at most 55 wt. %, more preferably at most 52 wt. %, more preferably at most 50 wt. %, based on the total weight of the graphitizable carbon source, the non-graphitizable carbon source and the amphiphilic species.

In one embodiment, the content of the non-graphitizable carbon source is in the range from 25 to 60 wt. %, preferably in the range from to 28 to 55 wt. %, more preferably in the range from 31 to 52 wt. %, more preferably in the range from 34 to 50 wt. %, based on the total weight of the graphitizable carbon source, the non-graphitizable carbon source and the amphiphilic species.

In one embodiment, the content of the amphiphilic species is at least 25 wt. %, preferably at least 30 wt. %, more preferably at least 33 wt. %, more preferably at least 36 wt. %, based on the total weight of the graphitizable carbon source, the non-graphitizable carbon source and the amphiphilic species.

In one embodiment, the content of the amphiphilic species is at most 70 wt. %, preferably at most 60 wt. %, more preferably at most 50 wt. %, more preferably at most 44 wt. %, based on the total weight of the graphitizable carbon source, the non-graphitizable carbon source and the amphiphilic species.

In one embodiment, the content of the amphiphilic species is in the range from 25 to 70 wt. %, preferably in the range from 30 to 60 wt. %, more preferably in the range from 33 to 50 wt. %, more preferably in the range from 36 to 44 wt. %, based on the total weight of the graphitizable carbon source, the non-graphitizable carbon source and the amphiphilic species.

In one embodiment, the content of the graphitizable carbon source is at least 1 wt. %, preferably at least 2 wt. %, more preferably at least 3 wt. %, more preferably at least 5 wt. %, based on the total weight of the formulation.

In one embodiment, the content of the graphitizable carbon source is at most 25 wt. %, preferably at most 20 wt. %, more preferably at most 17 wt. %, more preferably at most 15 wt. %, based on the total weight of the formulation.

In one embodiment, the content of the graphitizable carbon source is in the range from 1 to 25 wt. %, preferably in the range from 2 to 20 wt. %, more preferably in the range from 3 to 17 wt. %, more preferably in the range from 5 to 15 wt. %, based on the total weight of the formulation.

In one embodiment, the content of the non-graphitizable carbon source is at least 20 wt. %, preferably at least 25 wt. %, more preferably at least 28 wt. %, more preferably at least 30 wt. %, based on the total weight of the formulation.

In one embodiment, the content of the non-graphitizable carbon source is at most 55 wt. %, preferably at most 52 wt. %, more preferably at most 50 wt. %, more preferably at most 47 wt. %, based on the total weight of the formulation.

In one embodiment, the content of the non-graphitizable carbon source is in the range from 20 to 55 wt. %, preferably in the range from to 25 to 52 wt. %, more preferably in the range from 28 to 50 wt. %, more preferably in the range from 30 to 47 wt. %, based on the total weight of the formulation.

In one embodiment, the content of the amphiphilic species is at least 18 wt. %, preferably at least 20 wt. %, more preferably at least 22 wt. %, more preferably at least 25 wt. %, based on the total weight of the formulation.

In one embodiment, the content of the amphiphilic species is at most 60 wt. %, preferably at most 55 wt. %, more preferably at most 50 wt. %, more preferably at most 45 wt. %, based on the total weight of the formulation.

In one embodiment, the content of the amphiphilic species is in the range from 18 to 60 wt. %, preferably in the range from 20 to 55 wt. %, more preferably in the range from 22 to 50 wt. %, more preferably in the range from 25 to 45 wt. %, based on the total weight of the formulation.

In one embodiment, the content of the graphitizable carbon source is at least 1 wt. %, preferably at least 2 wt. %, more preferably at least 5 wt. %, more preferably at least 8 wt. %, based on the total weight of the formulation.

In one embodiment, the content of the graphitizable carbon source is at most 30 wt. %, preferably at most 25 wt. %, more preferably at most 20 wt. %, more preferably at most 15 wt. %, based on the total weight of the formulation.

In one embodiment, the content of the graphitizable carbon source is in the range from 1 to 30 wt. %, preferably in the range from 2 to 25 wt. %, more preferably in the range from 5 to 20 wt. %, more preferably in the range from 8 to 15 wt. %, based on the total weight of the formulation.

In one embodiment, the content of the non-graphitizable carbon source is at least 25 wt. %, preferably at least 28 wt. %, more preferably at least 31 wt. %, more preferably at least 34 wt. %, based on the total weight of the formulation.

In one embodiment, the content of the non-graphitizable carbon source is at most 60 wt. %, preferably at most 55 wt. %, more preferably at most 52 wt. %, more preferably at most 50 wt. %, based on the total weight of the formulation.

In one embodiment, the content of the non-graphitizable carbon source is in the range from 25 to 60 wt. %, preferably in the range from to 28 to 55 wt. %, more preferably in the range from 31 to 52 wt. %, more preferably in the range from 34 to 50 wt. %, based on the total weight of the formulation.

In one embodiment, the content of the amphiphilic species is at least 25 wt. %, preferably at least 30 wt. %, more preferably at least 33 wt. %, more preferably at least 36 wt. %, based on the total weight of the formulation.

In one embodiment, the content of the amphiphilic species is at most 54 wt. %, preferably at most 50 wt. %, more preferably at most 46 wt. %, more preferably at most 43 wt. %, based on the total weight of the formulation.

In one embodiment, the content of the amphiphilic species is in the range from 25 to 70 wt. %, preferably in the range from 30 to 60 wt. %, more preferably in the range from 33 to 50 wt. %, more preferably in the range from 36 to 44 wt. %, based on the total weight of the formulation.

|2| The formulation according to any of the preceding embodiments, wherein the ratio by weight of the non-graphitizable carbon source to the graphitizable carbon source is in the range from 5:0.35 to 5:2.8, preferably in the range from 5:0.5 to 5:2, more preferably in the range from 5:0.7 to 5:1.5

|3| The formulation according to any of the preceding embodiments, wherein the amphiphilic species has a decomposition temperature $T_D$ and the graphitizable carbon source has a softening temperature $T_S$ wherein $T_D$ is above $T_S$, preferably at least 10°C above, more preferably at least 15°C above, more preferably at least 20°C above. The decomposition temperature is preferably determined according to the test method herein. The softening point is preferably determined according to the test method herein.

In a further embodiment, the amphiphilic species has a decomposition temperature $T_D$ and the graphitizable carbon source has a decomposition temperature $T_{DG}$, wherein $T_D$ is lower than $T_{DG}$, preferably at least 10°C lower, more preferably at least 15°C lower, more preferably 20°C lower. The decomposition temperatures are preferably determined according to the test methods herein.

|4| The formulation according to any of the preceding embodiments, wherein the amphiphilic species has a decomposition temperature $T_D$ below 500°C, preferably below 420°C, more preferably below 370°C. Decomposition temperature is preferably determined according to the method presented herein.

|5| The formulation according to any of the preceding embodiments, wherein the amphiphilic species gives a residual mass for heating to 1000°C from 25°C under argon at 5°C/min of less than 10 wt. %, preferably less than 2 wt. %, more preferably less than 0.6 wt. %. The heating is preferably performed according to the second TGA test method described herein.

|6| The formulation according to any of the preceding embodiments, further comprising a cross-linking agent. The cross-linking agent is preferably adapted and arranged for cross-linking the non-graphitizable carbon source. The cross-linking agent is preferably adapted and arranged so as not to cross-link the graphitizable carbon source. The cross-linking agent if preferably in the range from 1 to 30 wt. %, more preferably from 2 to 25 wt. %, more preferably from 3 to 20 wt. %, more preferably 5 to 15 wt. %.

|7| The formulation according to any of the embodiments |1| to |5|, wherein the formulation does not contain a cross-linking agent, preferably does not contain a species capable of cross-linking the non-graphitizable carbon source. The formulation preferably does not contain more than 1 wt. % of a cross-linking agent, preferably not more than 0.1 wt. %, more preferably not more than 0.02 wt. %.

|8| The formulation according to any of the preceding embodiments, wherein the non-graphitizable carbon source comprises a molecule having two or more OH groups. In one aspect of this embodiment, the non-graphitizable carbon source has a content of at least 90 wt. % of molecules having two or more OH groups, preferably at least 95 wt. %, more preferably at least 99 wt. %. In this aspect, it is preferred that the non-graphitizable carbon source is made up of molecules having two or more OH groups. In one aspect of this embodiment, the non-graphitizable carbon source comprises a molecule having 5 or more, preferably 10 or more, more preferably 20 or more OH groups, preferably in a content of at least 90 wt. %, more preferably at least 95 wt. %, more preferably at least 99 wt. %. In one aspect of this embodiment, the non-graphitizable carbon sources comprises a single species having two or more OH groups per molecule. In another aspect of this embodiment, the non-graphitizable carbon sources comprises two or more species, each having two or more OH groups per molecule.

|9| The formulation according to any of the preceding embodiments, wherein the non-graphitizable carbon source comprises, preferably is, one or more selected from the group consisting of: a sugar and a species comprising two or more phenolic structural units per molecule. Preferred species having two or more phenolic structural units per molecule are polyphenols and phenolic resins.

|10| The formulation according to any of the preceding embodiments, wherein the non-graphitizable carbon source comprises, preferably is, a phenolic resin. A preferred phenolic resin comprises per molecule two or more phenolic based structural units and one or more aldehyde based structural units. Preferred phenolic compounds may have per molecule a single phenyl ring or two or more phenyl rings, preferably a single phenyl ring. Preferred phenolic compounds in this context are one or more selected from the group consisting of: phenol (hydroxybenzene), o-cresol (1-methyl-2-hydroxybenzene), m-cresol (1-methyl-3-hydroxybenzene), p-cresol (1-methyl-4-hydroxybenzene), p-tert butylphenol (1-tert-butyl-4-hydroxybenzene), p-tert octylphenol (i-tert-octyl-4- hydroxybenzene), p-tert nonylphenol (1-nonyl-4- hydroxybenzene), 2,3-xylenol (1,2-dimethyl-3- hydroxybenzene), 2,4-xylenol (1,3-dimethyl-4- hydroxybenzene), 2,5-xylenol (1,4-dimethyl-2- hydroxybenzene), 2,6-xylenol (1,3-dimethyl-2- hydroxybenzene), 3,4-xylenol (1,2-dimethyl-4- hydroxybenzene), 3,5-xylenol (1,3-dimethyl-5- hydroxybenzene) & resorcinol (1,3-dihydroxybenzene), bisphenol-a (2,2-dis(4-hydroxyphenyl)propane). The preferred phenolic compounds are phenol, cresols and resorcinol, most preferably phenol or resorcinol. Preferred aldehydes in this context are one or more selected from the group consisting of: formaldehyde, acetaldehyde, propionaldehyde, butylaldehyde, furfural, glyoxal and benzaldehyde; preferably formaldehyde. A preferred phenolic resin comprises two or more resorcinol based structural units and one or more formaldehyde based structural units. A preferred phenolic resin is a resorcinol formaldehyde resin. Another preferred phenolic resin is phenol formaldehyde resin. A preferred phenolic resin is a novolac. A preferred phenolic resin has a ratio of aldehyde based structural units to phenolic based structural units in the range from 0.5:1 to 1:1, preferably in the range from 0.6:1 to 0.95:1, more preferably in the range from 0.7:1 to 0.9:1.

In a further embodiment, the phenolic resin comprises a structural unit based on a ketone, in addition to or in place of a structural unit based on an aldehyde.

|11| The formulation according to any of the preceding embodiments, wherein the non-graphitizable carbon source comprises, preferably is, a polyphenol. A preferred polyphenol comprises two or more gallic acid based structural units. A preferred polyphenol comprises two or more ester structural units. A preferred polyphenol is a tannin. A preferred tannin is a hydrolysable tannin. A preferred tannin is tannic acid. A preferred tannin is decagaloyl glucose. A preferred tannin is $C_{76}H_{52}O_{46}$.

|12| The formulation according to any of the preceding embodiments, wherein the non-graphitizable carbon source comprises a non-graphitizable carbon source compound comprises the following:

> i. an aromatic ring having 1 or more attached OH groups, preferably 2 or more, more preferably 3 or more, more preferably 4 or more OH groups;
> ii. an ester link, preferably 2 or more, more preferably 3 or more, more preferably 4 or more ester groups.

In one aspect of this embodiment, the aromatic ring has a first OH group and a second OH group and the first and second OH groups are adjacent to each other in the aromatic ring. It is preferred for 3 or more OH groups to each be adjacent to another OH group, preferably 4 or more OH groups, most preferably all OH groups.
In one aspect of this embodiment, the non-graphitizable carbon source compound comprises 2 or more aromatic rings i., preferably 3 or more, more preferably 4 or more, more preferably 5 or more.
In one aspect of this embodiment one or more of the OH groups may be present in de-protonated form.
In one aspect of this embodiment, the carbon source compound is present as a salt, preferably comprising an organic anion and a metal cation.
In one aspect of this embodiment, the aromatic ring i. is a 6-member ring.
In one aspect of this embodiment, the aromatic ring i. is a carbon ring.
In one aspect of this embodiment, the aromatic ring i. is a 6-member carbon ring.

|13|The formulation according to embodiment 1121, wherein the aromatic ring i. is a 6-member ring. In one aspect of this embodiment, the aromatic ring i. is a carbon ring. In another aspect of this embodiment, the aromatic ring i. is a heterocycle comprising carbon and at least one other element, preferably selected form the group consisting of: P, N, O, S, and B.

|14| The formulation according to embodiment 1121 or 1131, wherein the aromatic ring i. is a carbon ring. In one aspect of this embodiment, the aromatic ring i. has 5 to 20 members. In another aspect of the embodiment, the aromatic ring i. has 5, 6, 7, 8, 10, 13, 14, 16 or 18 members, preferably 6, 10, 13, 14, 16 or 18, more preferably 6 or 10, most preferably 6 members.

|15|The formulation according any of the embodiments 1121 to 1141, wherein the non-graphitizable carbon source compound satisfies one or more of the following features:

b. a molecular weight in the range from 500 to 4000 g/mol, preferably in the range from 500 to 3000 g/mol, more preferably in the range from 1000 to 2500 g/mol, most preferably in the range from 1500 to 2000 g/mol;
c. a total number of hydroxyl groups attached to an aromatic carbon ring of more than 12, preferably from 12 to 100, more preferably from 15 to 50, more preferably from 20 to 35;
d. from 5 to 7 aromatic carbon rings per 1000 g/mol of molecular weight.

|16| The formulation according any of the embodiments |12| to |15|, wherein the non-graphitizable carbon source compound comprises a gallic acid structural unit or an ellagic acid structural unit or both. In one aspect of this embodiment, the non-graphitizable carbon source compound comprises a gallic acid structural unit, preferably from 2 to 12, more preferably from 5 to 11, most preferably 3 to 10 gallic acid structural units. It is preferred in this aspect for the non-graphitizable carbon source compound not to contain ellagic acid. In one aspect of this embodiment, the non-graphitizable carbon source compound comprises an ellagic acid structural unit, preferably from 2 to 12, more preferably from 5 to 11, most preferably 3 to 10 ellagic acid structural units. It is preferred in this aspect for the carbon source compound not to contain gallic acid. In one aspect of this embodiment, the non-graphitizable carbon source compound comprises both an ellagic acid structural unit and a gallic acid structural unit, preferably from 2 to 12, more preferably from 5 to 11, most preferably 3 to 10 ellagic acid and gallic acid structural units in total.

|17| The formulation according any of the embodiments |12| to |16|, wherein the non-graphitizable carbon source compound comprises a polyalcohol structural unit. In one aspect of this embodiment, the polyalcohol structural unit has 2 or more, more preferably 2 to 10, most preferably, 4 to 7 carbon atoms. In one aspect of this embodiment, the polyalcohol structural unit has 2 or more, more preferably 2 to 10, more preferably, 3 to 7, most preferably 4 to 6 OH groups. In one aspect of this embodiment, the polyalcohol structural unit is a sugar. Preferred sugars are glucose and quinic acid.

|18|The formulation according to any of the preceding embodiments, wherein the graphitizable carbon source comprises, preferably is, one or more selected from the group consisting of: a hydrocarbon and elemental carbon.

|19|The formulation according to any of the preceding embodiments, wherein the graphitizable carbon source comprises an aromatic molecule. A preferred aromatic molecule has two or more adjacent aromatic rings. In one aspect of this embodiment, the graphitizable carbon source has a content of at least 80 wt. % of aromatic molecules, preferably at least 90 wt. %, more preferably at least 95 wt. %, more preferably at least 99 wt. %. In this aspect, it is preferred that the graphitizable carbon source is made up of aromatic molecules. In one aspect of this embodiment, the graphitizable carbon source comprises a single aromatic species. In another aspect of this embodiment, the graphitizable carbon source comprises two or more aromatic species.

|20| The formulation according to any of the preceding embodiments, wherein the graphitizable carbon source comprises one or more selected from the group consisting of: naphthol and mesophase pitch, coal tar pitch, petroleum pitch, coke, anthracene, bitumen.

|21| The formulation according to any of the preceding embodiments, wherein the amphiphilic species comprises a molecule comprising two or more adjacent ethylene oxide based repeating units, preferably 5 or more, more preferably 7 or more, more preferably 20 or more, or 30 or more, or 50 or more. The amphiphilic compound might comprise up to about 1000 adjacent ethylene oxide based repeating units. In one aspect of this embodiment, the amphiphilic species has a content of at least 90 wt. % of molecules comprising two or more adjacent ethylene oxide based repeating units, preferably at least 95 wt. %, more preferably at least 99 wt. %. In this aspect, it is preferred that the amphiphilic species is made up of molecules comprising two or more adjacent ethylene oxide based repeating units. In one aspect of this embodiment, the amphiphilic species comprises a single species having two or more adjacent ethylene oxide based repeating units per molecule. In another aspect of this embodiment, the amphiphilic species two or more species, each having two or more adjacent ethylene oxide based repeating units per molecule.

|22| The formulation according to embodiment |21|, wherein the molecule comprises two or more adjacent units of a repeating unit based on one selected from the group consisting of: propylene oxide, butylene oxide, ethylene, propylene and butylene, preferably propylene oxide.

|23|The formulation according to any of the preceding embodiments, wherein the amphiphilic species is a block copolymer.

|24| A process for the preparation of a porous carbon material, the process comprising the following steps:

a. Providing a formulation according to any of the preceding embodiments;
b. Heating the formulation to obtain the porous carbon material.

|25| The process according to embodiment |24|, wherein step a. comprises a mixing step.

|26| The process according to embodiment |24| or |25|, wherein the heating step b. is performed in an inert atmosphere. One preferred inert atmosphere is nitrogen. Another preferred atmosphere is argon. The atmosphere may contain some $CO_2$ or CO or both.

|27| The process according to any of the embodiments |24| to |26|, wherein the heating in step b. is at a temperature in the range from above 550 to 3000°C, preferably in the range from 700 to 3000°C, more preferably in the range from 725 to 2800°C, more preferably in the range from 750 to 2500°C.

|81| The process according to any of the embodiments |24| to |27|, further comprising a step c. of reducing the size of the porous carbon material. Step c. is preferably performed directly or indirectly after the step b.

|29| The process according to any of the embodiments |24| to |28|, wherein the graphitizable carbon source and the non-graphitizable carbon source are both carbonized in heating step b.

|30| The process according to any of the embodiments |24| to |29|, wherein step a. comprises a heating step. The heating step in step a. is preferably performed at a temperature in a range from 100 to 550°C. One preferred heating step in step a. is for facilitating mixing and homogenisation. Heating for facilitating mixing and homogenisation is preferably performed at a temperature in the range from 100 to 280°C, preferably 120 to 220°C, more preferably 130 to 200°C. Another preferred heating step in step a. is for facilitating hardening the formulation. Heating for facilitating hardening is preferably performed at a temperature in the range from above 400°C to 700°C, preferably from 425 to 675°C, more preferably from 450 to 650°C.

|31| A porous carbon material obtainable by the process of any of the embodiments |24| to 1301.

|32| A device comprising the porous carbon material according to embodiment 1311.

|33| The device according to claim |32|, wherein the device is selected from the group consisting of the following: a lithium-ion cell, a capacitor, a lead-acid cell, a fuel cell, a desalination device; preferably from: a lithium-ion cell and a fuel cell. Preferred capacitors are electric double layer capacitors.

|34| A use of a mixture of a graphitizable carbon source and a non-graphitizable carbon for preparing a porous carbon material, preferably having a reduced ratio of $BET_{micro}$ to $BET_{total}$.

|35| A use of a porous carbon material according to embodiment |31|, for improving the properties of an electrical device. Preferred electrical devices in this context are electrochemical cells, capacitors, electrodes and fuel cells.

|36| A use of a porous carbon material according to embodiment |31|, for improving ion transport in an electrical device. Preferred electrical devices in this context are electrochemical cells, capacitors, electrodes and fuel cells.

|37| A use of a porous carbon material according to embodiment 1311, for improving power density by enhancing ion diffusivity in electrodes of lithium ion batteries.

|38| A use of a porous carbon material according to embodiment |31|, for improving energy density by enabling increased electrode thickness in lithium ion batteries.

|39| A use of a porous carbon material according to embodiment |31|, for reducing the drying time of electrodes to be used in lithium ion batteries.

|40| A use of a porous carbon material according to embodiment |31|, for reducing the electrolyte filling time of electrodes in lithium ion batteries.

|41| A use of a porous carbon material according to embodiment |31|, for improving power density by enhancing ion diffusivity in electrodes of electric double layer capacitors.

|42| A use of a porous carbon material according to embodiment |31|, for improving energy density by enabling increased electrode thickness in electric double layer capacitors.

|43| A use of a porous carbon material according to embodiment |31|, for improving cycle life in lead acid batteries.

|44| A use of a porous carbon material according to embodiment |31|, for improving deep-discharge capacity in lead acid batteries.

|45| A use of a porous carbon material according to embodiment |31|, for improving dynamic charge acceptance in lead acid batteries.

|46| A use of a porous carbon material according to embodiment |31|, for improving cycle life in fuel cells.

|47| A use of a porous carbon material according to embodiment |31|, for improving the low temperature conductivity of electrolytes in lithium ion batteries.

|48| A use of a porous carbon material according to embodiments |31|, for increasing solid content in a slurry process while maintaining good processing viscosity.

|49| A use of a porous carbon material according to embodiment |31|, for improving the water transport in fuel cells.

Detailed Description

Throughout this document disclosures of ranges are to be understood to include both end points of the range. Furthermore, each disclosure of a range in the description is to be understood as also disclosing preferred sub-ranges in which one end point is excluded or both end points are excluded. For example, disclosure of the range from 5 to 10 kg is to be understood as disclosing a range including the end points 5 kg and 10 kg. Furthermore, it is to be understood as also disclosing a range including the end point 5 kg but excluding the end point 10 kg, a range excluding the end point 5 kg but including the end point 10 kg and a range excluding both end points 5 kg and 10 kg.

Throughout this document, phrases in the form "A comprises only B" or "A is B" are to be understood as meaning that A comprises B and is essentially free of any other constituents. Preferably A in such case comprises less than 10 wt. %, more preferably less than 1 wt. %, further more preferably less than 0.1 wt. % of other constituents, based on the total weight of A. It is most preferred for A to be free of any constituents other than B. This concept generalises to an A having two or more constituents, such as in phrases of the general form "A comprises only B and C" and "A is B and C". In such a case, A preferably comprises less than 10 wt. %, more preferably less than 1 wt. %, further more preferably less than 0.1 wt. % of constituents other than B and C, based on the total weight of A. It is most preferred for A to be free of any constituents other than B or C.

Similarly, phrases of the general form "A does not comprise B" are to be understood as meaning that A is essentially free of B. Preferably A in such case comprises less than 10 wt. %, more preferably less than 1 wt. %, further more preferably less than 0.1 wt. % of B, based on the total weight of A. It is most preferred for A to be free of B. This concept generalises to an A which comprises none of a group of two or more specified constituents, such as a group of the general form "B and C". Preferably A in such a case comprises a total amount of B and C of less than 10 wt. %, more preferably less than 1 wt. %, further more preferably less than 0.1 wt. %, based on the total weight of A. It is most preferred for A to be free either B or C or both, preferably both.

Furthermore, phrases of the form "A comprises B" are to be understood in the customary manner, wherein A contains B, but may also contain other constituents. As a secondary meaning, the term "comprises" may correspond to the term "consists of'. The phrase "A comprises B" may thus in second order of preference denote that A consists of B.

The formulation of the present invention may comprise a solvent or a dispersant or both. In this document, the term solvent is used as a general term and in particular can refer to a solvent itself or to a dispersant or to both. In particular, preferred features described in the context of a solvent are also preferred features for a dispersant.

Compounds in the context of the present document preferably are describable as a stoichiometric combination of elements. Preferred compounds may be molecules or ions or molecular ions.

The term "phenolic" is used in this document, both as an adjective and as a noun, to describe a class of compounds which are commonly referred to either as "phenolics" or as "phenols". The term includes the species $C_6H_5OH$ known as "phenol", as well as a number of other similar compounds having a benzene ring with an attached hydroxy function.

The terms graphitizable carbon source and non-graphitizable source are well known to the skilled person. For further information, the "First Publication of 30 Tentative Definitions" of the International Committee for Characterization and Terminology of Carbon (Carbon Vol. 20. No. 5, pp. 445-449, 1982) can be consulted.

Formulation

One aspect of the invention is a formulation comprising:

- A graphitizable carbon source;
- A non-graphitizable carbon source; and
- An amphiphilic species.

The formulation may comprise further species. Some examples of further species are a solvent and a cross-linking agent.

In one embodiment, the formulation does not contain further species. A preferred formulation can contain a total content of the graphitizable carbon source, the non-graphitizable carbon source and the amphiphilic species which is at least 90 wt. %, based on the total weight of the formulation, preferably at least 99 wt. %, more preferably at least 99.9 wt. %.

Where further constituents are present in the formulation, they are notionally considered to be separate from the graphitizable carbon source and the non-graphitizable carbon source and from the amphiphilic species, for example for the purposes of calculating proportions by mass. For example, where the carbon sources are prepared in a solvent and introduced to the other constituent or other constituents of the formulation as a solution, the solvent is considered in the context of this disclosure as a further constituent and does not count as part of the carbon sources.

The formulation is for preparing a porous carbon material by heating. The formulation may be an intermediate product in a process for the preparation of a porous carbon material. The formulation may be present at an elevated temperature, preferably above 20°C, more preferably above 50°C, more preferably above 100°C.

Process for preparing a porous carbon material

One aspect of the invention is a process for preparing a porous carbon material comprising the process steps:

a. Providing a formulation according to any of the preceding claims;
b. Heating the formulation to obtain the porous carbon material.

Amphiphilic species

The amphiphilic species of the present invention preferably serves to direct the formation of a three-dimensional structure, preferably a bicontinuous three-dimensional structure, from the carbon source, preferably from the non-graphitizable carbon source. The amphiphilic species is preferably present in the formulation in the form of micelles and 3-dimensional structures and preferably leads to the formation of pores in the resulting porous carbon material.

The amphiphilic species can comprise a first amphiphilic compound. In further embodiments, the amphiphilic species can comprise one or more further amphiphilic compounds.

A preferred amphiphilic species has a residual mass of less than 10 wt. % on heating to 1000°C from 25°C at 5°C/min under argon, preferably less than 3 wt. %, more preferably less than 1 wt. %. Heating is preferably performed according to the second TGA test method presented herein.

One preferred amphiphilic species comprises an amphiphilic compound having two or more adjacent ethylene oxide based repeating units. Where two or more amphiphilic compounds are present in the amphiphilic species, the preferred features disclosed in relation to the amphiphilic compound are preferred features for each amphiphilic compound.

Preferred amphiphilic compounds possess both hydrophilic and lipophilic behaviour.

Hydrophilic behaviour

The two or more adjacent ethylene oxide based repeating units contribute to the hydrophilic behaviour of the amphiphilic compound. In one embodiment, the hydrophilic behaviour is exclusively due to the ethylene oxide based repeating units. In another embodiment, a contribution is made to the hydrophilic behaviour of the amphiphilic compound by something other than ethylene oxide based repeating units, preferably provided by one or more selected from the group consisting of: a charged group and a polar uncharged group. Preferred polar uncharged groups comprise one or more selected from the group consisting of: O, S, N, P, F, Cl, Br and I. More preferred polar uncharged groups comprise O. Examples of preferred polar uncharged groups are: hydroxyl, carboxyl, carbonyl, aldehyde, ester, ether, peroxy, haloformyl, carbonate ester, hydroperoxyl, hemiacetal, hemiketal, acetal, ketal, orthoester, methylenedioxy, orthocarbonate ester, sulphhydryl, sulphide, disulphide, sulphinyl, sulphonyl, sulphino, sulpho, thiocyanate, isothiocyanate, carbonothioyl, phosphino, phosphono, phosphate, carboxamide, amine, ketamine, adimine, imide, azide, azo, cyanate, isocyanate, nitrate, nitrile, isonitrile, nitrosooxy, nitro, nitroso, oxime, pyridyl, chloro, bromo and iodo. Preferred polar uncharged groups are hydroxyl and ester, more preferably hydroxyl. Preferred charged groups can be cationic or anionic. Examples of preferred anionic groups are: carboxylate, sulphate, sulphonate and phosphate, more preferably carboxylate. Preferred cationic groups are ammonium.

The lipophilic behaviour of the amphiphilic compound is preferably provided by one or more hydrocarbon moieties or one or more poly-ether moieties different to poly ethylene oxide or one or more of each.

Preferred hydrocarbon moieties may be saturated or unsaturated. A preferred saturated hydrocarbon is an alkane. Preferred alkanes may be linear, branched, cyclic or a mixture thereof. Preferred unsaturated hydrocarbon moieties comprises one or more carbon-carbon double bonds or one or more aromatic rings or one or more of each. A preferred hydrocarbon comprises a carbon chain or two or more carbon chains, each carbon chain preferably having 5 or more carbon atoms, more preferably 10 or more carbon atoms, most preferably 20 or more carbon atoms. The carbon chain preferably comprises one or more selected from the group consisting of: a straight carbon chain, a branched carbon chain and a carbon ring. The carbon chain preferably comprises a straight carbon chain, preferably is a straight carbon chain. Preferred carbon chains in this context may comprise one or more selected form the group consisting of: an alkane unit, an alkene unit, and an alkyne unit. The carbon chain preferably comprises an alkane unit, more preferably is an alkane.

Repeating units

The amphiphilic compound comprises two or more adjacent ethylene oxide based repeating units. The ethylene oxide based repeating unit preferably has the formula $-(CH_2CH_2O)-$. The amphiphilic compound preferably comprises two or more, preferably 5 or more, more preferably 10 or more, more preferably 20 or more, more preferably 50 or more ethylene oxide based repeating units. In one aspect of this embodiment, the amphiphilic compound comprises one or more blocks of ethylene oxide based repeating units, each block comprising two or more, preferably 5 or more, more preferably 10 or more, more preferably 20 or more, more preferably 50 or more ethylene oxide based repeating units connected directly in a chain.

In one embodiment, it is preferred for the amphiphilic compound to comprise one or more of a further repeating unit, the further repeating unit being different to an ethylene oxide based repeating unit.

The further repeating unit is preferably a propylene oxide based repeating unit. The propylene oxide based repeating unit preferably has the formula $-(CHCH_3CH_2O)-$. The amphiphilic compound preferably comprises two or more, preferably 5 or more, more preferably 10 or more, more preferably 20 or more, more preferably 50 or more of the further repeating unit. In one aspect of this embodiment, the amphiphilic compound comprises one or more blocks of the further repeating unit, each block comprising two or more, preferably 5 or more, more preferably 10 or more, more preferably 20 or more, more preferably 50 or more of the further repeating unit connected directly in a chain.

The amphiphilic compound may comprise a butylene oxide based repeating unit, preferably two or more, preferably 5 or more, more preferably 10 or more, more preferably 20 or more, more preferably 50 or more of the butylene oxide based repeating unit. In one aspect of this embodiment, the amphiphilic compound comprises one or more blocks of the butylene oxide based repeating unit, each block comprising two or more, preferably 5 or more, more preferably 10 or more, more preferably 20 or more, more preferably 50 or more of the butylene oxide based repeating unit connected directly in a chain.

In one embodiment, it is preferred for the amphiphilic compound to comprise one or more ethylene oxide based repeating units and one or more of a further repeating unit, the further repeating unit being different to an ethylene oxide based repeating unit. The further repeating unit is preferably a propylene oxide based repeating unit. The propylene oxide based repeating unit preferably has the formula $-(CHCH_3CH_2O)-$. The amphiphilic compound preferably comprises two or more, preferably 5 or more, more preferably 10 or more, more preferably 20 or more, more preferably 50 or more ethylene oxide based repeating units. In one aspect of this embodiment, the amphiphilic compound comprises one or more blocks of ethylene oxide based repeating units, each block comprising two or more, preferably 5 or more, more preferably 10 or more, more preferably 20 or more, more preferably 50 or more ethylene oxide based repeating units connected directly in a chain. The amphiphilic compound preferably comprises two or more, preferably 5 or more, more preferably 10 or more, more preferably 20 or more, more preferably 50 or more of the further repeating unit. In one aspect of this embodiment, the amphiphilic compound comprises one or more blocks of the repeating unit, each block comprising two or more, preferably 5 or more, more preferably 10 or more, more preferably 20 or more, more preferably 50 or more of the further repeating unit connected directly in a chain. In a preferred aspect of this embodiment, the amphiphilic compound comprises one or more blocks of ethylene oxide based repeating units and one or more blocks of the further repeating unit. In one aspect of this embodiment, the amphiphilic compound comprises one or more ethylene oxide based repeating units and two or more further repeating units. One of the two or more further repeating units is preferably a propylene oxide based repeating unit. It is particularly preferred that the amphiphilic compound comprises one or more blocks of each of the ethylene oxide based repeating unit and the two or more further repeating units.

In one preferred embodiment the amphiphilic compound is a block copolymer comprising one or more hydrophilic blocks and one or more hydrophobic blocks. The preferred hydrophilic block is an ethylene oxide based repeat unit. Preferred hydrophobic blocks are a propylene oxide-based block, a butylene oxide-based block, or a hydrocarbon block, preferably a propylene oxide-based block or a hydrocarbon block. Preferred block copolymers are diblock copolymers of the form AB or triblock copolymers of the form ABA or BAB.

In one embodiment, the amphiphilic compound is a triblock copolymer of the form ABA, wherein A is an ethylene oxide-based block and B is either a propylene oxide-based block or a hydrocarbon.

In one embodiment, the amphiphilic compound is a triblock copolymer of the form BAB, wherein A is an ethylene oxide-based block and B is either a propylene oxide-based block or a hydrocarbon.

In one embodiment, the amphiphilic compound is a diblock copolymer of the form AB, wherein A is an ethylene oxide-based block and B is either a propylene oxide-based block or a hydrocarbon.

In one embodiment, the amphiphilic compound is a mixed triblock copolymer of the form BAC, wherein A is an ethylene oxide-based block, B and C are different and each chosen from the group consisting of: a propylene oxide-based block and a hydrocarbon.

In one embodiment, the amphiphilic compound is a block copolymer, preferably as above, with one or more terminal groups, preferably selected from the group consisting of: a hydrocarbon, sulphate, phosphate, an amine, carboxylate and an ammonium salt.

In one embodiment, the amphiphilic species may be provided in a solvent. In this case, the solvent is notionally separate from the amphiphilic species for the purposes of calculating properties of the amphiphilic species, such content by weight in the formulation.

In one embodiment, the amphiphilic species comprises a compound having an HLB value measured by the Griffin Method in the range from 1 to 19, preferably in the range from 2 to 19, more preferably in the range from 4 to 19, more preferably in the range from 6 to 17, more preferably in the range from 8 to 15. In one embodiment, preferred amphiphilic compounds have an HLB measured by the Griffin Method of 1 or more; or more than 1; or 2 or more; or more than 2; or 4 or more; or more than 4.

In one embodiment, the amphiphilic species comprises a compound having an HLB value measured by the Reference Method described in the test methods in the range from 1 to 19, preferably in the range from 2 to 19, more preferably in the range from 4 to 19, more preferably in the range from 6 to 17, more preferably in the range from 8 to 15. In one embodiment, preferred amphiphilic compounds have an HLB measured by the Reference Method described in the test methods of 1 or more; or more than 1; or 2 or more; or more than 2; or 4 or more; or more than 4.

In one embodiment, the amphiphilic species comprises a compound having an HLB value measured by the Davies Method of 1 or more; or more than 1; or 2 or more; or more than 2; or 4 or more; or more than 4; or 6 or more; or more than 6; or 8 or more; or more than 8. Some amphiphilic compounds can have an HLB value measured by the Davies Method of up to 100. The above-mentioned embodiments also apply to this contribution.

In one embodiment, the amphiphilic species comprises a compound having an HLB value measured by the Effective Chain Length Method (Guo et al. Journal of Colloid and Interface Science 298 (2006) 441-450) of 1 or more; or more than 1; or 2 or more; or more than 2; or 4 or more; or more than 4; or 6 or more; or more than 6; or 8 or more; or more than 8. Some amphiphilic compounds can have an HLB value measured by the Effective Chain Length Method of up to 100. The above-mentioned embodiments also apply to this contribution.

In one embodiment, 0.5 g of the amphiphilic species satisfies one or more of the following criteria immediately after shaking in 10 ml of distilled water, preferably determined according to the test method described herein:

    a. gas bubbles are present
    b. only one non-gas phase is present
    c. only one non-gas phase is present and this phase is liquid and clear

Clear in this context preferably means producing an obscuration of less than 0.1 % according to the method given herein. In the various aspects of this embodiment, the following combinations are satisfied: a, b, c, b+c, a+b, a+c or a+b+c. It is preferred for at least c to be satisfied.

Gas bubbles can be present within the body of another phase or may accumulate at the top of another phase to form a foam.

In one embodiment, 0.5 g of the amphiphilic species satisfies one or more of the following criteria 5 minutes after shaking in 10 ml of distilled water, preferably determined according to the test method described herein:

a. only one non-gas phase is present
b. only one non-gas phase is present and this phase is liquid and clear

Clear in this context preferably means producing an obscuration of less than 0.1 % according to the method given herein. It is preferred for at least b to be satisfied.

In one embodiment, 0.5 g of the amphiphilic species satisfies one or more of the following criteria 10 minutes after shaking in 10 ml of distilled water, preferably determined according to the test method described herein:

a. only one non-gas phase is present
b. only one non-gas phase is present and this phase is liquid and clear

Clear in this context preferably means producing an obscuration of less than 0.1 % according to the method given herein. It is preferred for at least b to be satisfied.

In one embodiment, 0.5 g of the amphiphilic species satisfies one or more of the following criteria 1 hour after shaking in 10 ml of distilled water, preferably determined according to the test method described herein:

a. only one non-gas phase is present
b. only one non-gas phase is present and this phase is liquid and clear

Clear in this context preferably means producing an obscuration of less than 0.1 % according to the method given herein. It is preferred for at least b to be satisfied.

In one embodiment, 0.5 g of the amphiphilic species satisfies one or more of the following criteria 1 day after shaking in 10 ml of distilled water, preferably determined according to the test method described herein:

a. only one non-gas phase is present
b. only one non-gas phase is present and this phase is liquid and clear

Clear in this context preferably means producing an obscuration of less than 0.1 % according to the method given herein. It is preferred for at least b to be satisfied.

Graphitizable Carbon Source

The graphitizable carbon source of the present invention, along with the non-graphitizable carbon source, preferably provides the carbon material for the formation of a three-dimensional structure. This three-dimensional structure preferably has open pores and also preferably channels, preferably built by connecting open pores.

A preferred graphitizable carbon source does not have a phase change to a gas. A preferred carbon source has no vaporisation temperature below 300°C, preferably none below 400°C, preferably none below 500°C, most preferably no vaporisation temperature. A preferred carbon source has no sublimation temperature below 300°C, preferably none below 400°C, preferably none below 500°C, preferably no sublimation temperature.

A preferred graphitizable carbon source has a residual mass of at least 30 wt. % on heating to 1000°C from 25°C at 5°C/min under argon, preferably at least 40 wt. %, more preferably at least 50 wt. %, more preferably at least 60 wt. %. Heating is preferably performed according to the TGA method presented herein.

A preferred graphitizable carbon source is not soluble in NaOH. Solubility in NaOH is preferably determined according to the test method presented herein.

A preferred graphitizable carbon source forms graphitic carbon on holding for 1 hour at 3000°C under argon at 500 Pa. This test is preferably performed on the material in isolation from other constituents of the formulation. This test is preferably performed on the material before mixing with other constituents of the formulation. Graphitization is preferably determined according to the X-ray crystallographic method presented herein.

The graphitizable carbon source preferably comprises a first graphitizable carbon source compound. In one embodiment of the invention, the carbon source comprises the first graphitizable carbon source compound only. In another embodiment, the carbon source comprises the first graphitizable carbon source compound and one or more further graphitizable carbon source compounds, or two or more, or three or more, or four or more further graphitizable carbon source compounds. Herein, preferred features disclosed in relation to the graphitizable carbon source compound are preferred features for the first graphitizable carbon source compound. Where one or more further graphitizable carbon source compounds are present in the carbon source, the preferred features disclosed in relation to the graphitizable carbon source compound or to the first graphitizable carbon source compound are also preferred features for one or more of, preferably all of, the further graphitizable carbon source compounds.

The graphitizable carbon source compound may be selected by the skilled person in such a manner as to provide a porous carbon product with the properties which he desires. In particular, the skilled person may select the identity and amount of the graphitizable carbon source for adjusting the specific surface area of the porous carbon material, as determined by BET.

In one embodiment, the graphitizable carbon source compound comprises one or more rings. In one aspect of this embodiment, the ring is a carbon ring. In another aspect of this embodiment, the ring comprises carbon and one or more heteroatoms. Preferred hetero atoms in this context are one or more selected form the group consisting of: O, S, N, P and Si, preferably from the group consisting of: O and N, most preferably O. The ring may be aromatic or nonaromatic, preferably aromatic. The ring may be saturated or unsaturated, preferably at least partially saturated. The ring preferably has a number of member atoms in the range from 3 to 9, preferably in the range from 4 to 7, more preferably 5 or 6. In one aspect of this embodiment, the ring has 5 member atoms. In another aspect of this embodiment, the ring has 6 member atoms. In one aspect of this embodiment, the ring is comprised in a ring system, wherein the ring shares one or more edges with one or more further rings in the ring system. Examples of preferred carbon rings in this context are: benzene, cyclohexane, cyclopentane, singularly unsaturated cyclopentane, doubly unsaturated cyclopentane, cycloheptane, singularly unsaturated cycloheptane, doubly unsaturated cycloheptane, triply unsaturated cycloheptane, cyclooctane, singularly unsaturated cyclooctane, doubly unsaturated cyclooctane, triply unsaturated cyclooctane, four times unsaturated cyclooctane, cyclononane, singularly unsaturated cyclononane, doubly unsaturated cyclononane, triply unsaturated cyclononane, four times unsaturated cyclononane, cyclobutene, singly unsaturated cyclobutene, doubly unsaturated cyclobutene and cyclopropane, preferably benzene, cyclohexane and cyclopentane, more preferably benzene. Preferred ring systems are anthracene, naphthalene, biphenyl, fluorene, phenalene, acenaphthylene, acenaphthene, phenanthrene, fluoranthene, pyrene and decalin, preferably anthracene, naphthalene and decalin, most preferably anthracene and naphthalene. Preferred rings comprising one or more heteroatoms are arrived at by replacing one carbon atom in one of the preferred carbon rings described above with a heteroatom, preferably from the preferred list of heteroatoms. Examples of preferred rings comprising hetero atoms are: piperidine, pyridine, tetrahydropyran, pyran, thiane, thiopyran, silinane, saline, phosphinane, phosphinine, piperazin, diazine, morpholine, oxazine, thiomorpholine, thiazine, dioxane, doioxine, dithiane, dithiin, hexahydro-1,3,5-triazine, triazine, trioxane, trithiane, tetrazine, pentazine, pyrrolidine, pyrrole, tetrahydrofuran, furan, tetrahydrothiophene, thiophene, phospholane, phosphole, silacyclopentane, silole, imidazolidine, pyrazolidine, imidazole, pyrazole, oxazolidine, isoxazolidine, oxazole, isoxazole, thiazolidine, isothiazolidine, thiazole, isothiazole, dioxolane, dithiolane, azetidine, azete, oxetane, exete, thietane and thiete, preferably pyridine, tetrahydropyran, pyran, thiane, thiopyran, pyrrolidine, pyrrole, tetrahydrofuran, furan, thiophene and tetrahydrothiophene. All of the above rings may be substituted in one or more positions, either to the rest of the compound or to one or more functional groups,

or to both. Preferred functional groups attached to the ring are one or more selected from the group consisting of hydroxyl, carboxyl, carbonyl, aldehyde, ester, ether, peroxy, haloformyl, carbonate ester, hydroperoxyl, hemiacetal, hemiketal, acetal, ketal, orthoester, methylenedioxy, orthocarbonate ester, sulphhydryl, sulphide, disulphide, sulphinyl, sulphonyl, sulphino, sulpho, thiocyanate, isothiocyanate, carbonothioyl, phosphino, phosphono, phosphate, carboxamide, amine, ketamine, adimine, imide, azide, azo, cyanate, isocyanate, nitrate, nitrile, isonitrile, nitrosooxy, nitro, nitroso, oxime, pyridyl, chloro, bromo, iodo, carboxylate, sulphate, sulphonate and phosphate and ammonium. The preferred functional group attached to the ring is hydroxyl.

A particularly preferred graphitizable carbon source is a hydrocarbon. Preferred hydrocarbons are aromatic hydrocarbons. Some preferred hydrocarbons are polycyclic aromatic hydrocarbons.

In one embodiment, the graphitizable carbon source is a mixture of two or more graphitizable carbon source compounds. Such mixtures may be naturally occurring or synthetic. Examples of mixtures in this context are: mesophase pitch, coal tar pitch, petroleum pitch, coke and bitumen.

Some preferred compounds are constituents of coal tar, such as benzene, toluene, xylenes, cumenes, coumarone, indene, benzofuran, naphthalene and methyl-naphthalenes, acenaphthene, fluorene, phenol, cresols, pyridine, picolines, phenanthracene, carbazole, quinolines, fluoranthene, chrysene, fluoranthene, pyrene, triphenylene, naphthacene, benzanthracene, picene, benzo[a]pyrene, benzo[e]pyrene, benzofluoranthenes, perylene, dibenzopyrenes, dibenzofluoranthenes, benzoperylenes and coronene. Preferred derivatives of the above compounds are methylated, polymethylated, monohydroxylated and polyhydroxylated derivatives heterocyclic compounds in which one or more ring carbon atoms are replaced with hetero atoms, preferably selected from the group consisting of O, S, N, P and Si, preferably from the group consisting of: O and N, most preferably O.

Non-graphitizable Carbon Source

The non-graphitizable carbon source of the present invention, along with the graphitizable carbon source, preferably provides the carbon material for the formation of a three-dimensional structure. This three-dimensional structure preferably has open pores and also preferably channels, preferably built by connecting open pores.

A preferred non-graphitizable carbon source is suitable for forming a three dimensional structure through self-construction in cooperation with the amphiphilic species.

A preferred non-graphitizable carbon source does not have a phase change to a gas. A preferred non-graphitizable carbon source has no vaporisation temperature below 300°C, preferably none below 400°C, preferably none below 500°C, most preferably no vaporisation temperature.

A preferred non-graphitizable carbon source has a residual mass of at least 10 wt. % on heating to 1000°C from 25°C at 5°C/min under argon, preferably at least 20 wt. %, more preferably at least 27 wt. %. The residual mass is preferably less than 50 wt. %, more preferably less than 45 wt. %, most preferably less than 43 wt. %. Heating is preferably performed according to the second TGA method presented herein.

A preferred graphitizable carbon source does not form graphitic carbon on holding for 1 hour at 3000°C under argon at 500 Pa. This test is preferably performed on the material in isolation from other constituents of the formulation. This test is preferably performed on the material prior to mixing with other constituents of the formulation. Graphitization is preferably determined according to the X-ray crystallographic method presented herein.

The non-graphitizable carbon source preferably comprises a first non-graphitizable carbon source compound. In one embodiment of the invention, the non-graphitizable carbon source comprises the first non-graphitizable carbon source compound only. In another embodiment, the non-graphitizable carbon source comprises the first non-graphitizable carbon source compound and one or more further non-graphitizable carbon source compounds, or two or more, or three or more, or four or more further non-graphitizable carbon source compounds. Herein, preferred features disclosed in relation to the non-graphitizable carbon source compound are preferred features for the first non-graphitizable carbon source compound. Where one or more further non-graphitizable carbon source compounds are present in the non-graphitizable carbon source, the preferred features disclosed in relation to the non-graphitizable carbon source compound or to the first non-graphitizable carbon source compound are also preferred features for one or more of, preferably all of, the further non-graphitizable carbon source compounds.

The non-graphitizable carbon source compound may be selected by the skilled person in such a manner as to provide a porous carbon product with the properties which he desires. In particular, the skilled person may select the identity and amount of the non-graphitizable carbon source for adjusting the porosity of the porous carbon material.

In one embodiment, the non-graphitizable carbon source comprises a heterocycle comprising carbon and at least one other element, preferably selected form the group consisting of: P, N, O, S, and B. A preferred heterocycle is melamine.

One preferred non-graphitizable carbon source is a phenolic resin. A phenolic resin is preferably prepared from a phenolic and a co-reaction species. A phenolic resin preferably has two or more structural units based on a phenolic and one or more structural units based on a co-reaction species. In one embodiment of the invention the non-graphitizable carbon source comprises a phenolic resin, preferably a novolac resin, preferably is a phenolic resin, preferably is a novolac resin. One preferred non-graphitizable carbon source is a phenol formaldehyde novolac resin. Another preferred non-graphitizable carbon source is a resorcinol formaldehyde novolac resin.

In another embodiment of the invention, the non-graphitizable carbon source comprises a precursor mixture to a phenolic resin, preferably is a precursor mixture to a phenolic resin. The precursor mixture preferably comprises a phenolic and a co-reaction species, wherein the phenolic is preferably in excess of the co-reaction species by mols. One preferred precursor comprises, preferably is, formaldehyde and phenol. Another preferred precursor comprises, preferably is, formaldehyde and resorcinol.

For each of the following preferred phenolic resins, a precursor mixture to the phenolic resin is also a preferred non-graphitizable carbon source.

Preferred co-reaction species are aldehydes or ketones, preferably aldehydes. Preferred co-condensation species are one or more selected from the group consisting of the following: formaldehyde, acetaldehyde, propionaldehyde, butylaldehyde, furfural, glyoxal, benzaldehyde, and a ketone. The preferred co-condensation species is formaldehyde.

Preferred phenolics comprise a benzene ring with one or more attached OH groups. Preferred phenols are one or more selected from the group consisting of the following: phenol (hydroxybenzene), o-cresol (1-methyl-2-hydroxybenzene), m-cresol (1-methyl-3-hydroxybenzene), p-cresol (1-methyl-4-hydroxybenzene), p-tert butylphenol (1-tert-butyl-4-hydroxybenzene), p-tert octylphenol (i-tert-octyl-4-hydroxybenzene), p-tert nonylphenol (1-nonyl-4- hydroxybenzene), 2,3-xylenol (1,2-dimethyl-3-hydroxybenzene), 2,4-xylenol (1,3-dimethyl-4-hydroxybenzene), 2,5-xylenol (1,4-dimethyl-2-hydroxybenzene), 2,6-xylenol (1,3-dimethyl-2-hydroxybenzene), 3,4-xylenol (1,2-dimethyl-4-hydroxybenzene), 3,5-xylenol (1,3-dimethyl-5-hydroxybenzene), resorcinol (1,3-dihydroxybenzene), bisphenol-A (2,2-dis(4-hydroxyphenyl)propane), preferably phenol, o-cresol, m-cresol, p-cresol or resorcinol, more preferably resorcinol or phenol.

In one embodiment, the phenolic has one or more carbon atoms replaced with one or more other element, preferably selected form the group consisting of: P, N, O, S, and B.

Preferred phenolic resins are novolac resins.

Preferred phenolic resins are prepared from an excess of a phenol over the co-condensation species by mols, preferably with a ratio of the phenol to the co-reaction species above 1:1, preferably above 1.3:1, more preferably above 1.5:1.

Preferred phenolic resins are prepared in acid, preferably at a pH below 7, more preferably below 4, more preferably below 3, more preferably below 2.5.

Preferred phenolic resins are acidic, preferably having a pH below 7, more preferably below 4, more preferably below 3, more preferably below 2.5.

In one embodiment, the non-graphitizable carbon source preferably comprises a resin of a phenolic and formaldehyde.

In one embodiment, the non-graphitizable carbon source preferably comprises a resin of phenol and formaldehyde.

In one embodiment, the non-graphitizable carbon source preferably comprises a resin of resorcinol and formaldehyde.

Preferred phenolic resins comprise from 5 to 400 aromatic rings, preferably 20 to 350 aromatic rings, more preferably from 30 to 300 aromatic rings, most preferably 40 to 200 aromatic rings.

Preferred phenolic resins are straight chains.

Preferred phenolic resins are not resoles.

The preferred non-graphitizable carbon source compound is a novolac-type resin or a derivative thereof, preferably from a resorcinol-formaldehyde reaction or a phenol-formaldehyde reaction.

The non-graphitizable carbon source of the present invention comprises a non-graphitizable carbon source compound which comprises following:

> i. an aromatic ring having 1 or more attached OH groups;
> ii. an ester link.

The non-graphitizable carbon source compound may comprise more than one aromatic ring i. In one aspect of this embodiment, the non-graphitizable carbon source compound comprises 2 or more aromatic rings i., preferably 3 or more, more preferably 4 or more, more preferably 5 or more. Where two or more aromatic rings i. are present in the non-graphitizable carbon source compound, the aromatic rings i. may be the same or different. It is preferred for the aromatic rings within the same non-graphitizable carbon source compound to be the same.

The aromatic ring i. preferably comprises adjacent OH groups. Adjacent OH group in the aromatic ring are connected to adjacent ring members. In one aspect of this embodiment, the aromatic ring has a first OH group and a second OH group and the first and second OH groups are adjacent to each other in the aromatic ring. It is preferred for 3 or more OH groups to each be adjacent to another OH group, preferably 4 or more OH groups, most preferably all OH groups.

The OH groups in the aromatic ring i. may be in protonated or de-protonated form. In one aspect of this embodiment, the non-graphitizable carbon source compound is present as a salt, preferably comprising an organic anion and a metal cation.

Preferred aromatic rings have from 5 to 20 ring members. In one embodiment, the aromatic ring i. has 5, 6, 7, 8, 10, 13, 14, 16 or 18 members, preferably 6, 10, 13, 14, 16 or 18, more preferably 6 or 10, most preferably 6 members.

In one embodiment, the aromatic ring i. is a carbon ring. In another embodiment, the aromatic ring i. is a heterocycle comprising carbon and at least one other element, preferably selected form the group consisting of: P, N, O, S, and B. Carbon rings are preferred.

In the following, we describe the aromatic ring in terms of its base without substituents. For example, phenol is described as benzene because it is equivalent to a benzene ring having an attached OH group.

Preferred carbon rings in this context are the following: benzene, naphthalene, anthracene and pyrene.

Preferred aromatic rings comprising oxygen are the following: furan, benzofuran and isobenzofuran. Preferred aromatic rings comprising one nitrogen atom are the following: pyrrole, indole, isoindole, imidazole, benzimidazole, purine, pyrazole, indazole, pyridine, quinoline, isoquinoline, pyrazine, quinoxaline, acridine, pyrimidine, quinazoline, pyradazine, cinnoline, phthalazine, 1,2,3-triazine, 1,2,4-triazine, and 1,3,5-triazine. Preferred aromatic rings comprising sulphur are the following: thiophene, benzothiophene and benzo[c]thiophene. Preferred aromatic rings comprising both nitrogen and oxygen are the following: oxazole, benzoxazole, isoxazole, benzisoxazole. Preferred aromatic rings comprising both nitrogen and sulphur are the following: thiazole and benzothiazole.

The non-graphitizable carbon source compound preferably comprises a polyalcohol structural unit. The polyalcohol structural unit preferably provides an anchoring point for further constituents of the compound, which are preferably linked to the polyalcohol via ester links.

In one embodiment, the polyalcohol structural unit has 2 or more, more preferably 2 to 10, most preferably, 4 to 7 carbon atoms. In one aspect of this embodiment, the polyalcohol structural unit has 2 or more, more preferably 2 to 10, more preferably, 3 to 7, most preferably 4 to 6 OH groups. In one aspect of this embodiment, the polyalcohol structural unit is a sugar. Preferred sugars are mono-saccharides, preferably having a chemical formula of the general form $C_nH_{2n}O_n$, wherein n is a whole number, preferably at least 3, more preferably 6. Preferred sugars are glucose, ribose, arabinose, xylose, lyxose, allose, altrose, mannonse, gulose, iodose, galactose and talose, more preferably glucose, ribose, arabinose and xylose, most preferably glucose. In one embodiment, the polyalcohol structural unit is glucose. In another embodiment, the polyalcohol structural unit is quinic acid.

Preferred non-graphitizable carbon source compounds are polyphenols. In one embodiment, the non-graphitizable carbon source is a polyphenol according to the White-Bate-Smith-Swain-Haslam (WBSSH) scheme.

In one embodiment, the non-graphitizable carbon source compound satisfies one or more of the following features:

a. a molecular weight in the range from 500 to 4000 g/mol, preferably in the range from 500 to 3000 g/mol, more preferably in the range from 1000 to 2500 g/mol, most preferably in the range from 1500 to 2000 g/mol;
b. a total number of hydroxyl groups attached to an aromatic carbon ring of more than 12, preferably from 12 to 100, more preferably from 15 to 50, more preferably from 20 to 35;
c. from 5 to 7 aromatic carbon rings per 1000 g/mol of molecular weight.

Preferred non-graphitizable carbon source compounds are tannins. Preferred tannins comprise one or more gallic acid structural units or one or more ellagic acid structural units or one or more gallic acid structural units and one or more ellagic acid structural units. Preferred tannins are so called gallotannins and ellagitannins. Preferred tannins are hydrolysable tannins. Preferred hydrolysable tannins comprise one or more ester structural units. Preferred hydrolysable tannins release gallic acid or ellagic acid when hydrolysed. Preferred tannins comprise one or more sugar structural units, preferably a single sugar structural unit. The preferred sugars in this context are glucose and quinic acid. In one embodiment, the non-graphitizable carbon source compound comprises a gallic acid structural unit, preferably from 2 to 12, more preferably from 5 to 11, most preferably 3 to 10 gallic acid structural units. In embodiment, the non-graphitizable carbon source compound comprises an ellagic acid structural unit, preferably from 2 to 12, more preferably from 5 to 11, most preferably 3 to 10 ellagic acid structural units. In one embodiment, the non-graphitizable carbon source compound comprises both an ellagic acid structural unit and a gallic acid structural unit, preferably from 2 to 12, more preferably from 5 to 11, most preferably 3 to 10 ellagic acid and gallic acid structural units in total. Tannic acid is a preferred non-graphitizable carbon source compound. In one embodiment, the non-graphitizable carbon source compound is a galloyl glucose. Preferred galloyl glucoses are the following: digalloyl glucose, trigalloyl glucose, tetragalloyl glucose, pentagalloyl glucose, hexagalloyl glucose, heptagalloyl glucose, octagalloyl glucose, nonagalloyl glucose, decagalloyl glucose, endecagalloyl glucose, dodecagalloyl glucose. In one embodiment, the non-graphitizable carbon source compound is a galloyl quinic acid. Preferred galloyl quinic acids are the following: digalloyl quinic acid, trigalloyl quinic acid, tetragalloyl quinic acid, pentagalloyl quinic acid, hexagalloyl quinic acid, heptagalloyl quinic acid, octagalloyl quinic acid, nonagalloyl quinic acid, decagalloyl quinic acid, endecagalloyl quinic acid, dodecagalloyl quinic acid. In one embodiment, the non-graphitizable carbon source compound is an ellagyl glucose. Preferred ellagyl glucoses are the following: diellagyl glucose, triellagyl glucose, tetraellagyl glucose, pentaellagyl glucose, hexaellagyl glucose, heptaellagyl glucose, octaellagyl glucose, nonaellagyl glucose, decaellagyl glucose, endecaellagyl glucose, dodecaellagyl glucose. In one embodiment, the non-graphitizable carbon source compound is an ellagyl quinic acid. Preferred ellagyl quinic acids are the following: diellagyl quinic acid, triellagyl quinic acid, tetraellagyl quinic acid, pentaellagyl quinic acid, hexaellagyl quinic acid, heptaellagyl quinic acid, octaellagyl quinic acid, nonaellagyl quinic acid, decaellagyl quinic acid, endecaellagyl quinic acid, dodecaellagyl quinic acid. In one embodiment, the non-graphitizable carbon source comprises a single non-graphitizable carbon source compound selected form the above. In another embodiment, the non-graphitizable carbon source comprises a mixture of two or more non-graphitizable carbon source compounds selected from the above. The preferred tannic acid is decagalloyl glucose and has the chemical formula $C_{76}H_{52}O_{46}$.

In one embodiment, the non-graphitizable carbon source is dispersed in water. In one preferred embodiment, the non-graphitizable carbon source comprises a novolac resorcinol-formaldehyde resin dispersed in water. In one aspect of this embodiment, the non-graphitizable carbon source is a novolac resorcinol-formaldehyde resin dispersed in water. In one preferred embodiment, the non-graphitizable carbon source comprises a novolac phenol-formaldehyde resin dispersed in water. In one aspect of this embodiment, the non-graphitizable carbon source is a novolac phenol-formaldehyde resin dispersed in water.

In one embodiment, the non-graphitizable carbon source is a solid. Preferred solids are pellets or flakes.

In one embodiment, the non-graphitizable carbon source may be provided in a solvent, preferably dissolved or dispersed. In this embodiment, the solvent may be present in the formulation. In this case, the solvent is considered to be separate from the non-graphitizable carbon source for the purposes of calculating properties of the non-graphitizable carbon source, such as content by weight in the formulation. In another embodiment, the non-graphitizable carbon source is introduced to the other constituents of the formulation as such, preferably in the absence of a solvent.

The non-graphitizable carbon source may be present in the formulation as a solid or a liquid. As a solid, it may be dispersed in the formulation. As a liquid, it may be present as a constituent of a liquid mixture. The liquid mixture may be viscous.

Solvent/dispersant

One or more solvents or dispersants may be present in the formulation. Solvents and dispersants are preferably liquids. Solvents and dispersants in this context preferably dissolve or disperse one or more of the constituents of the formulation, either prior to or after formation of the formulation. Preferred features of the solvent are described here and these features are also preferred features of a dispersant. A solvent may be introduced to the other constituents of the formulation as such or as a solvent for one or more of the other constituents of the formulation prior to formation of the formulation. If one or more solvents are employed, they are considered to be separate from other constituents of the formulation for the purpose of calculating content by weight, even if they are employed as a solvent therefor prior to formation of the formulation. For example, if a carbon source is introduced to the other constituents of the formulation in the form of a solution or dispersion of the carbon source in a solvent, the content of the carbon source in the formulation is calculated excluding the content of the solvent. This also applies to an amphiphilic species provided in a solvent or a cross-linking agent provided in a solvent.

Solvents may be any solvent known to the skilled person and which he considers appropriate in the context of the invention, in particular solvents which are selected for their capability to dissolve or disperse one or more of the constituents of the formulation. Solvents may be organic or inorganic. A preferred solvent has a boiling point. Solvents preferably vaporise without leaving a residue when heated to above their boiling point. The preferred inorganic solvent is water. Preferred organic solvents are alcohols, ethers, aldehydes, esters or ketones, preferably alcohols. Preferred alcohols are methanol, ethanol or propanol, preferably ethanol. Another preferred organic solvent is acetone.

In one embodiment, the formulation does not comprise a solvent.

Cross-linking agent

One or more cross-linking agents may be present in the formulation. Preferred cross-linking agents serve the purpose of facilitating the joining together of the non-graphitizable carbon source into a 3-dimensional structure in the porous carbon material. A cross-linking agent can be a catalyst, preferably a polymerisation catalyst for the carbon source.

Cross-linking agents may be any compound known to the skilled person which he considers appropriate in the context of the invention, in particular compounds which are selected for their capability for facilitating the joining together of the non-graphitizable carbon source.

Preferred cross-linking agents comprise two or more functional groups. Preferred functional groups are able to form a link to the carbon source.

Preferred cross-linking agents are one or more selected from the group consisting of: para toluene sulphonic acid, hexamethylenetetramine, hexamethoxymethylmelamine and 2-nitro-2-methyl-1-propanol.

In one embodiment, the cross-linking agent is a methylene donor.

In one embodiment of the invention, the formulation comprises a cross-linking agent, preferably in the range from 1 to 30 parts by weight, more preferably in the range from 2 to 20 parts by weight, more preferably in the range from 5 to 10 parts by weight, based on 100 parts of the non-graphitizable carbon source. In a preferred aspect of this embodiment, the cross-linking agent is a cross-linking agent for the carbon source. In one aspect of this embodiment, the cross-linking agent is a catalyst for polymerising the carbon source. In a preferred embodiment, the formulation does not comprise a cross-linking agent. In one embodiment, the formulation does not comprise more than 10 parts by weight of cross-linking agent, more preferably not more than 1 part, more preferably not more than 0.1 part, most preferably not more than 0.01 parts based on 100 parts of the non-graphitizable carbon source. In particular for a desired pore volume it is preferred to have less than 10 parts, preferably less than 1 part, more preferably less than 0.1 parts, more preferably less than 0.01 parts, or even no cross-linking agent present, based on 100 parts of the non-graphitizable carbon source.

Process Conditions

The process of the invention preferably comprises a heating step. The heating step preferably serves to obtain a porous carbon material from the formulation, preferably through construction of a 3-D carbon network.

In the heating step, one or more constituents other than the carbon sources, preferably all constituents other than the carbon sources, are removed from the formulation so as not to remain in the porous carbon material. Preferably one or more selected from the following group, preferably all of the members of the following group which are present in the formulation, are removed from the formulation during the heating step so as not to remain in the porous carbon material: the amphiphilic species; the solvent, if present; and further constituents, if present, other than the carbon source. Constituents removed from the formulation during the heating step can exit the formulation whole, for example by evaporation or sublimation, or can decompose inside the formulation whereupon the decomposition products exit the formulation. Where some carbon sources is removed during heating, it is only a part of the carbon sources.

The heating step preferably comprises a high temperature firing. The high temperature firing is preferably performed at a temperature in the range from 700 to 3000°C. The purpose of the high temperature firing step preferably serves to carbonize and potentially graphitise the carbon source, thereby obtaining the porous carbon material.

In one embodiment, the heating step b. comprises a carbonization step, but not graphitization step. In another embodiment, the heating step comprises a carbonization step and a separate graphitization step. In another embodiment, the heating step comprises a combined heating for carbonization and graphitization.

A preferred temperature for carbonization is in the range from 700 to 1500°C, preferably in the range from 750 to 1400°C, most preferably in the range from 800 to 1200°C.

The process may comprise a graphitisation step, designed to modify the properties of the porous carbon material. A graphitisation step is preferably performed at a higher temperature to a carbonization step. Preferred temperatures for the graphitisation step are in the range from above 1500 to 3000°C, more preferably in the range from 1600 to 2800°C, most preferably in the range from 1700 to 2500°C.

The provision of the formulation may comprise heating steps for homogenisation, mixing and hardening.

The process of the invention may comprise a mixing step, in which two or more constituents of the formulation, or the formulation itself, is mixed. In one embodiment, the process of the invention comprises a mixing step. In another embodiment, the process of the invention does not comprise a mixing step.

Porous Carbon Material

A contribution to achieving at least one of the above mentioned objects is made by a porous carbon material according to the present invention. It is preferred according to the invention that the carbon source is carbonised in the heating step and the porous carbon material is obtained. The porous carbon material differs from the formulation in one or more, preferably all, of the following ways: constituents of the formulation other than the carbon sources are removed from the formulation during heating and are no longer present in the porous carbon material; some atoms other than carbon are removed from the carbon sources during heating and are no longer present in the porous carbon material, whereby the porous carbon material has a lower proportional content of atoms other than carbon than the carbon sources; the porous carbon material is a contiguous solid, in contrast to the formulation which comprises a mixture of liquids and non-contiguous solids; the porous carbon material has a lower density than the carbon sources or than the formulation or than both. In some instances, part of the carbon content of the carbon sources can be removed during heating.

The term contiguous solid is used in reference to the porous carbon material to indicate that the carbon atom constituents of the porous carbon material are linked in collections of atoms which are immoveable relative to each other, wherein those collections are larger than the molecular scale, preferably having a largest dimension more than 100 Angstrom, more preferably more than 500 Angstrom, further more preferably more than 1000 Angstrom, more preferably more than 5000 Angstrom, more preferably more than 10,000 Angstrom. In one embodiment, the porous carbon material is present as a body having a largest dimension of at least 1 mm, preferably at least 1 cm, more preferably at least 5 cm. In another embodiment, the porous carbon material is present as a collection of particles, preferably following a step in which a single body is split into two or more bodies.

The porous carbon material preferably has the features described in the embodiments disclosed above in the summary of the invention.

Technological Applications

The porous carbon material can be employed in a number of technical applications. Preferred applications are the following: An electrochemical cell; a fuel cell, in particular a hydrogen fuel cell, and there in particular in proton exchange membrane; a capacitor; an electrode; and a catalyst. Preferred electrochemical cells in this context are lead acid cells and lithium ion cells. Preferred capacitors in this context are electric double layer capacitors.

Process conditions and individual constituents can be selected to achieve desired properties of the porous carbon material whilst still working within the scope of the invention. For example, a graphitisation step following firing can be employed for further decreasing the BET surface area of the porous carbon material.

The porous carbon material preferably has the properties described in the embodiments section.

In one embodiment, the porous carbon material has one or more, preferably all of the following features:

a. $BET_{TOTAL}$ of less than 300 $m^2/g$, preferably less than 200 $m^2/g$, more preferably less than 150 $m^2/g$; more preferably less than 100 $m^2/g$

b. $BET_{MICRO}$ of less than 100 $m^2/g$, preferably less than 60 $m^2/g$, more preferably less than 30 $m^2/g$;

c. Mean pore size above 40 nm, preferably above 50 nm, more preferably above 60 nm. In some cases the mean pore size may be up to about 280 nm;

d. Modal pore size above 40 nm, preferably above 50 nm, more preferably above 60 nm. In some cases the modal pore size may be up to about 280 nm;

e. A ratio of modal pore size to mean pore size in the range from 0.2 to 1.1, preferably in the range from 0.4 to 1.05, more preferably in the range from 0.6 to 1;

f. Total pore volume greater than 0.5 $cm^3/g$, preferably greater than 0.7 $cm^3/g$, more preferably greater than 1.0 $cm^3/g$, for pores having a pore size in the range from 10 nm to 10000 nm. In some cases the total pore volume may be up to 2.0 $cm^3/g$;

g. Particle diameter $d_{90}$ below 15 $\mu$m, preferably below 12 $\mu$m, more preferably below 10 $\mu$m. In some cases the particle diameter $d_{90}$ can be as low as 100 nm;

h. Less than 25 ppm impurities other than carbon, preferably less than 20 ppm, more preferably less than 18 ppm;

i. Fe content less than 25 ppm, preferably less than 20 ppm, more preferably less than 15 ppm;

j. Conductivity greater than 2 S/cm, preferably greater than 4 S/cm, more preferably greater than 6 S/cm.

In one aspect of this embodiment, it is preferred for one or more of the features a. b. d. f. g. h. i. & j. to be fulfilled.

In another aspect of this embodiment, it is preferred for at least features c. & d. to be fulfilled.

Porous carbon materials of this embodiment are particularly suitable for use in lithium ion cells, in particular as a cathode additive. A contribution is made towards at least one of the above mentioned objects by a lithium ion cell comprising the porous carbon material of the invention, preferably according to this embodiment.

In one embodiment, the porous carbon material has one or more, preferably all of the following features:

a. $BET_{TOTAL}$ of less than 100 $m^2/g$, preferably less than 80 $m^2/g$, preferably less than 70 $m^2/g$, more preferably less than 60 $m^2/g$;

b. $BET_{MICRO}$ of less than 20 $m^2/g$, preferably less than 15 $m^2/g$, more preferably less than 10 $m^2/g$;

c. Mean pore size above 40 nm, preferably above 50 nm, more preferably above 60 nm. In some cases the mean pore size can be as high as 280 nm;

d. Modal pore size above 40 nm, preferably above 50 nm, more preferably above 60 nm. In some cases the modal pore size can be as high as 280 nm;

e. A ratio of modal pore size to mean pore size in the range from 0.2 to 1.1, preferably in the range from 0.4 to 1.05, more preferably in the range from 0.6 to 1;

f. Total pore volume greater than 0.5 $cm^3/g$, preferably greater than 0.8 $cm^3/g$, more preferably greater than 1.1 $cm^3/g$, for pores having a pore size in the range from 10 nm to 10000 nm. In some cases the total pore volume may be up to 2.0 $cm^3/g$;

g. Particle size ($d_{90}$) below 15 $\mu$m, preferably below 12 $\mu$m, more preferably below 10 $\mu$m. In some cases the particle size $d_{90}$ can be as low as 100 nm;

h. Less than 25 ppm impurities other than carbon, preferably less than 20 ppm, more preferably less than 18 ppm;

i. Fe content less than 25 ppm, preferably less than 20 ppm, more preferably less than 15 ppm;

j. Conductivity greater than 0.5 S/cm, preferably greater than 0.7 S/cm, more preferably greater than 1 S/cm.

In one aspect of this embodiment, it is preferred for one or more of the features a. b. d. f. g. h. i. & j. to be fulfilled.

In another aspect of this embodiment, it is preferred for at least features c. & d. to be fulfilled.

Porous carbon materials of this embodiment are particularly suitable for use in lithium ion cells, in particular as an anode additive. A contribution is made towards at least one of the above mentioned objects by a lithium ion cell comprising the porous carbon material of the invention, preferably according to this embodiment.

In one embodiment, the porous carbon material has one or more, preferably all of the following features:

a. $BET_{TOTAL}$ greater than 200 $m^2/g$, preferably greater than 300 $m^2/g$, more preferably greater than 400 $m^2/g$. In some cases, the $BET_{TOTAL}$ may be up to 1000 $m^2/g$;

b. $BET_{MICRO}$ greater than 150 $m^2/g$, preferably greater than 200 $m^2/g$, more preferably greater than 250 $m^2/g$. In some cases, the $BET_{MICRO}$ may be up to 1000 $m^2/g$;

c. Mean pore size above 40 nm, preferably above 50 nm, more preferably above 60 nm. In some cases the mean pore size can be as high as 280 nm;

d. Modal pore size above 40 nm, preferably above 50 nm, more preferably above 60 nm. In some cases the modal pore size can be as high as 280 nm;

e. A ratio of modal pore size to mean pore size in the range from 0.2 to 1.1, preferably in the range from 0.4 to 1.05, more preferably in the range from 0.6 to 1;

f. Total pore volume greater than 0.7 $cm^3/g$, preferably greater than 1.0 $cm^3/g$, more preferably greater than 1.3 $cm^3/g$, for pores having a pore size in the range from 10 nm to 10000 nm. In some cases the total pore volume may be up to 2.0 $cm^3/g$;

g. Particle size ($d_{50}$) greater than 25 $\mu$m, preferably greater than 30 $\mu$m, more preferably greater than 35 $\mu$m; In some cases the $d_{50}$ particle size may be up to about 200 $\mu$m;

h. Less than 4000 ppm impurities other than carbon, preferably less than 2500 ppm, more preferably less than 1500 ppm;

i. Fe content less than 250 ppm, preferably less than 200 ppm, more preferably less than 150 ppm;

j. Conductivity greater than 0.1 S/cm, preferably greater than 0.2 S/cm, more preferably greater than 0.3 S/cm.

In one aspect of this embodiment, it is preferred for one or more of the features a. b. d. f. g. h. i. & j. to be fulfilled.

In another aspect of this embodiment, it is preferred for at least features c. & d. to be fulfilled.

Porous carbon materials of this embodiment are particularly suitable for use in lead acid electrochemical cells. A contribution is made towards at least one of the above mentioned objects by a lead acid electrochemical cell comprising the porous carbon material of the invention, preferably according to this embodiment.

In one embodiment, the porous carbon material has one or more, preferably all of the following features:

a. $BET_{TOTAL}$ of greater than 400 $m^2/g$, preferably greater than 450 $m^2/g$, more preferably greater than 500 $m^2/g$. In some cases, the $BET_{TOTAL}$ may be up to 2000 $m^2/g$;

b. $BET_{MICRO}$ greater than 200 $m^2/g$, preferably greater than 250 $m^2/g$, more preferably greater than 300 $m^2/g$. In some cases, the $BET_{MICRO}$ may be up to 1000 $m^2/g$;

c. Mean pore size above 40 nm, preferably above 50 nm, more preferably above 60 nm. In some cases the mean pore size may be up to about 280 nm;

d. Modal pore size above 40 nm, preferably above 50 nm, more preferably above 60 nm. In some cases the modal pore size may be up to about 280 nm;

e. A ratio of modal pore size to mean pore size in the range from 0.2 to 1.1, preferably in the range from 0.4 to 1.05, more preferably in the range from 0.6 to 1;

f. Total pore volume less than 1.2 $cm^3/g$, preferably less than 1 $cm^3/g$, more preferably less than 0.8 $cm^3/g$, for pores having a pore size in the range from 10 nm to 10000 nm;

g. Particle size $d_{90}$ below 15 $\mu$m, preferably below 12 $\mu$m, more preferably below 10 $\mu$m. In some cases the particle size $d_{90}$ can be as low as 100 nm;

h. Less than 25 ppm impurities other than carbon, preferably less than 20 ppm, more preferably less than 18 ppm;

i. Fe content less than 25 ppm, preferably less than 20 ppm, more preferably less than 15 ppm;

j. Conductivity greater than 2 S/cm, preferably greater than 6 S/cm, more preferably greater than 10 S/cm.

In one aspect of this embodiment, it is preferred for one or more of the features a. b. d. f. g. h. i. & j. to be fulfilled.

In another aspect of this embodiment, it is preferred for at least features c. & d. to be fulfilled.

Porous carbon materials of this embodiment are particularly suitable for use in electric capacitors, preferably electric double layer capacitors. A contribution is made towards at least one of the above mentioned objects by a capacitor, preferably an electric double layer capacitor, comprising the porous carbon material of the invention, preferably according to this embodiment.

In one embodiment, the porous carbon material has one or more, preferably all of the following features:

a. $BET_{TOTAL}$ of greater than 150 $m^2/g$, preferably greater than 200 $m^2/g$, more preferably greater than 250 $m^2/g$. In some cases, the $BET_{TOTAL}$ may be up to 900 $m^2/g$;

b. $BET_{MICRO}$ less than 200 $m^2/g$, preferably less than 175 $m^2/g$, more preferably less than 150 $m^2/g$. In some cases, the $BET_{MICRO}$ may be as low as to 10 $m^2/g$;

c. Mean pore size above 40 nm, preferably above 50 nm, more preferably above 60 nm. In some cases the mean pore size may be up to about 280 nm;

d. Modal pore size above 40 nm, preferably above 50 nm, more preferably above 60 nm. In some cases the modal pore size may be up to about 280 nm;

e. A ratio of modal pore size to mean pore size in the range from 0.2 to 1.1, preferably in the range from 0.4 to 1.05, more preferably in the range from 0.6 to 1;

f. Total pore volume more than 0.5 $cm^3/g$, preferably more than 0.75 $cm^3/g$, more preferably more than 1.0 $cm^3/g$,

for pores having a pore size in the range from 10 nm to 10000 nm;

g. Particle size $d_{90}$ below 7 $\mu$m, preferably below 5 $\mu$m, more preferably below 3 $\mu$m. In some cases the particle size $d_{90}$ can be as low as 200 nm;

h. Less than 25 ppm impurities other than carbon, preferably less than 20 ppm, more preferably less than 18 ppm;

i. Fe content less than 25 ppm, preferably less than 20 ppm, more preferably less than 15 ppm;

j. Conductivity greater than 2 S/cm, preferably greater than 4 S/cm, more preferably greater than 5 S/cm.

In one aspect of this embodiment, it is preferred for one or more of the features a. b. d. f. g. h. i. & j. to be fulfilled.

In another aspect of this embodiment, it is preferred for at least features c. & d. to be fulfilled.

Porous carbon materials of this embodiment are particularly suitable for use in electrochemical cells, preferably fuel cells, more preferably proton exchange membrane fuel cells. A contribution is made towards at least one of the above mentioned objects by a fuel cell, preferably a proton exchange membrane fuel cell, comprising the porous carbon material of the invention, preferably according to this embodiment.

A further aspect of this disclosure relates to a porous carbon product having a specified distribution of particle size, preferably of particle diameter, preferably as determined by the test method presented herein. A preferred particle size, preferably particle diameter, is preferably a particle size of contiguous bodies.

Test methods

The following test methods are used in the invention. In absence of a test method, the ISO test method for the feature to be measured published most recently before the earliest filing date of the present application applies. In absence of distinct measuring conditions, standard ambient temperature and pressure (SATP) as a temperature of 298.15 K (25 °C, 77 °F) and an absolute pressure of 100 kPa (14.504 psi, 0.986 atm) apply.

Skeletal density (also referred to as material density or backbone density)

The skeletal density measurements were performed according to DIN 66137-2. Between 0.49g and 0.51g of the powder sample were weighed in the sample cell and dried at 200 °C under vacuum for 1h prior to the measurement. The mass after drying was used for the calculation. A Pycnomatic ATC Helium Pycnometer from Themo Fisher Scientific, Inc. was used for the measurement, employing the "small" sample volume and the "small" reference volume. The pycnometer is calibrated monthly using the "extra small" sphere with a well-known volume of around 3 cm$^3$. Measurements were performed using Helium with a purity of 4.6, at a temperature of 20.00 °C and a gas pressure of approx. 2 bar, according to the DIN standard and the SOP of the device.

Mercury porosimetry (pore size and pore volume)

The specific pore volume for different pore sizes, the cumulative pore volume, and the porosity were measured by mercury porosimetry. The mercury porosimetry analysis was performed according to ISO15901-1 (2005). A Thermo Fisher Scientific PASCAL 140 (low pressure up to 4bar) und a PASCAL 440 (high pressure up to 4000bar) and SOLID Version 1.6.3 (26.11.2015) software (all from Thermo Fisher Scientific, Inc.) were calibrated with porous glass spheres with a modal pore diameter of 140.2 nm and pore volume of 924.4 mm$^3$/g (ERM-FD122 Reference material from BAM). During measurements the pressure was increased or decreased continuously and controlled automatically by the instrument running in the PASCAL mode and speed set to 8 for intrusion and 9 for extrusion. The Washburn method was employed for the evaluation and the density of Hg was corrected for the actual temperature. Value for surface tension was 0.48 N/m and contact angle 140°. Sample size was between about 25 and 80 mg. Before starting a measurement, samples were heated to 150°C in vacuum for 1 hour.

Gas adsorption (Total, external and micropore specific surface area, $BET_{total}$, $BET_{external}$ and $BET_{micro}$)

BET measurements to determine the specific surface area of particles are made in accordance with DIN ISO 9277:2010. A NOVA 3000 (from Quantachrome) which works according to the SMART method (Sorption Method with Adaptive dosing Rate), is used for the measurement. As reference material Quantachrome Alumina SARM Catalog No. 2001 (13.92 m$^2$/g on multi-point BET method), and SARM Catalog No. 2004 (214.15 m$^2$/g on multi-point BET method) available from Quantachrome are used. Filler rods are added to the reference and sample cuvettes in order to reduce the dead volume. The cuvettes are mounted on the BET apparatus. The saturation vapour pressure of nitrogen gas ($N_2$ 4.0) is determined. A sample is weighed into a glass cuvette in such an amount that the cuvette with the filler rods is completely filled and a minimum of dead volume is created. The sample is kept at 200°C for 1 hour under vacuum in order to dry it. After cooling the weight of the sample is recorded. The glass cuvette containing the sample is mounted on the measuring apparatus. To degas the sample, it is evacuated at a pumping speed selected so that no material is sucked into the pump to a final pressure of 10 mbar.

The mass of the sample after degassing is used for the calculation. For data analysis the No-vaWin 11.04 Software is used. A multi-point analysis with 5 measuring points is performed and the resulting total specific surface area ($BET_{total}$) given in $m^2/g$. The dead volume of each sample cell is determined once prior the measurement using Helium gas (He 4.6, humidity 30 ppmv). The glass cuvettes are cooled to 77 K using a liquid nitrogen bath. For the adsorptive, $N_2$ 4.0 with a molecular cross-sectional area of 0.162 $nm^2$ at 77 K is used for the calculation.

The empirical t-plot methodology is used according to ISO15901-3:2007 to discriminate between contributions from micropores and remaining porosity at relative pressures of more than 0.1 (i.e. mesoporosity, macroporosity and external surface area contributions) and to calculate the micropore surface ($BET_{micro}$) and micropore volume. The low pressure isotherm data points up to a cut-off $p/p_0$, typically up to 0.1 $p/p_0$ are selected to determine the linear section of the t-plot. Data point selection is validated by obtaining a positive C constant. The micropore volume is determined from the ordinate intercept. The micropore specific surface area ($BET_{micro}$) can be calculated from the slope of the t-plot.

The external specific surface area $BET_{external}$ is defined by subtracting the micropore specific surface area from the total specific surface area, $BET_{external} = BET_{total} - BET_{micro}$

Particle size distribution

Laser diffraction ($D_{10}$, $D_{50}$, $D_{90}$):

For particle size determination of the particles a laser diffraction method was used according to ISO Standard 13320. A Mastersizer 3000 from Malvern equipped with a He-Ne Laser (wave length of 632.8 nm with a maximum power of 4 mW) and a blue LED (wave length of 470 nm with a maximum power of 10 mW) and wet dispersing unit (Hydro MV) was employed for the measurements performed at ambient temperature of 23°C. A mixture of isopropanol and deionized water (50% / 50%) was used as measurement medium. The mixture was degassed in the dispersing unit by using the built-in stirrer at 3500 rpm and ultrasonicate at maximum power for 10 seconds. The sample material is prepared as a concentrated dispersion in 100% isopropanol (40 mL). The quantity of material is sufficient to create a homogeneous mixture after the ultrasonic finger mixing for 30 seconds. The sample is added to the dispersing unit drop-wise with a pipette until the obscuration value is between 3-7%. The values of $D_{10}$, $D_{50}$ and $D_{90}$ (volume based) were determined using the Malvern software Mastersizer 3000 Software 3.30, and a form factor of 1. The Fraunhofer theory is used for samples where the particles are > 10 $\mu$m and the Mie theory is applied to materials where the particles are < 10 $\mu$m.

Sieving (weight fraction having particle size of more than 315 $\mu$m):

Sieving for weight fractions with particles having a size larger than 315 $\mu$m were performed carefully with a sieve with an Air Jet RHEWUM LPS 200 MC sieving machine (RHEWUM GmbH) equipped with a sieve with 315 $\mu$m openings from Haver und Böcker (HAVER & BOECKER OHG).

Dispersibility of amphiphilic molecule in water

A 0.5 g of amphiphilic molecule and 10 mL of deionized water are introduced into a 20 mL glass container with screw top lid. The closed container is vigorously shaken for 25 seconds. This 25 second shaking is repeated 10 further times separated by 10 minute intervals. After a 1 day interval, the closed container is again vigorously shaken for 25 seconds and the 25 second shaking is repeated 10 further times separated by 10 minute intervals. The container is inspected visually immediately after the final shaking. The dispersibility is characterised by the following three features:

    a. whether gas bubbles are present
    b. whether one non-gas phase is or more than one non-gas phases are present
    c. where a single non-gas phase is present, whether the phase is milky or clear

Clear in this context preferably means producing an obscuration of less than 0.1 % according to the method given herein. The container is also inspected after the following periods of time following the final shaking: 5 minutes, 10 minutes, one hour and one day. In each further inspection, the dispersibility is characterised according to features b. & c..

Gas bubbles can be present within the body of another phase or may accumulate at the top of another phase to form a foam.

Powder conductivity

The powder test sample is compacted using uniaxial mechanical pressing with a pressure of 75 kg/cm$^2$. An electrical current was applied to the compacted test sample using gold plated electrodes and the potential difference across the voltage drop measured. From this measurement the electrical resistance and thus the conductivity in S/cm are calculated. A value of more than 1 S/cm is classed as being electrically conductive.

Obscuration determination for solution clarity

The clarity of a solution is determined by laser obscuration using the Malvern Mastersizer 3000 instrument equipped with a He-Ne Laser (632.8 nm wavelength) and a blue LED and wet dispersing unit (Hydro MV) and measurements are performed at ambient temperature of 23°C. A mixture containing 5 g of amphiphilic molecule in 100 mL of deionized water are introduced into a 250 mL glass container with a screw top lid. The Hydro MV dispersing unit is automatically filled with deionized water by the Malvern software Mastersizer 3000 Software 3.30 and the background measurement is measured. The built-in stirrer is set at 500 rpm and the solution is continuously stirred. An aliquot of 5 mL is pipetted out of the 100 mL water / 5 g amphiphilic molecule solution and added to the Hydro MV dispersing unit. The unit is stirred at 500 rpm for 2 minutes. Three measurements are taken, each of 10 seconds, and the average obscuration of the He-Ne laser is determined for each measurement by the software and is reported as a percent. The path length of light through the sample is 2.6 mm. An obscuration $(I_0\text{-}I)/I_0$ of less than 0.1% is considered to be clear.

Ethylene oxide content determination in polyols by NMR

The determination of the ethylene oxide (EO) content is determined using the ASTM standard test method (D4875-05). The test method B with carbon-13 nuclear magnetic resonance spectroscopy ($^{13}$C NMR) is used. A Bruker AC 300 spectrometer was used with deuterated acetone (NMR-grade with tetramethylsilane (TMS) as internal standard) and NMR sample tubes with diameter of 5 mm. Samples are prepared with 3 mL of amphiphilic molecule with 2 mL of deuterated acetone, mixtures are vigorously shaken for 25 seconds. The shaking is repeated 10 times at 10 minute intervals. The appropriate sample amount is transferred to an NMR tube.

The spectrometer parameters are set as in the ASTM method with: the lock on acetone d-6, pulse angle 90°, acquisition time of 2 seconds, pulse delay of 5 seconds, spectral width of 100 ppm, and 32k data point acquisition and the H-1 decoupler on. The signal is acquired with 2000 transients and Fourier transformed from a weighted free induction decay signal to the frequency domain spectrum. The integrated areas of the PO (propylene oxide) methane and methylene carbon peaks (from 76.6 to 72.8 and 67.0 to 65.2 ppm (TMS reference)) and the EO carbon resonances (from 72.6 to 68.3 and 62.0 to 61.0 ppm) are obtained. For EO-capped polyols, the resonance at 73.1 ppm corresponds to the beta carbon of the terminal EO block and is subtracted from the PO peak area and added to the EO peak area. The PO and EO ratio is obtained by:

$$PO\big/_{EO} = \frac{B' + C' - F}{B + C + F}$$

Where:

B' = area of the PO resonances
B = area of the EO carbons
C' = area of PO terminal methane carbon
C = total area of terminal EO carbons, and
F = area of terminal EO carbon of an EO block.
(Areas C and F are only significant for EO-capped polyols.)

The weight percent of EO is calculated from the PO/EO ratio (calculated above) by:

$$EO = \frac{44}{58\big(PO\big/_{EO}\big) + 44} \times 100$$

Where the molecular mass for EO is 44 g/mol EO and for PO is 58 g/mol PO. The EO percent is reported to the nearest tenth percent.

Adjacent ethylene oxide unit determination by coupled LC and MALDI-TOF MS

The method of S. M. Weidner et al. (Rapid Commun. Mass Spectrom. 2007; 21: 2750-2758) is employed. The ions are detected with a micro-channel plate (MCP) detector. The mass spectrum is analysed to determine the presence of spectral features separated by 44 $m/z$ units which correspond to adjacent EO units.

Determination of Effective HLB value of amphiphilic molecules - Reference Method

An Effective HLB value is determined from the stability determination of an oil and water emulsion made with various blends of two surfactants. The emulsion is made with a canola oil [CAS 120962-03-0] and deionized water. If the unblended surfactant to be tested makes a two-phase dispersion or a non-clear dispersion in the water dispersibility test immediately after shaking, it is considered a low HLB value dispersant and is blended with Tween® 20 (HLB value from Griffin Method of 16.7 and available from Croda GmbH, [CAS 9005-64-5]). If the surfactant to be tested makes a single non-gas-phase dispersion with a clear phase in the water dispersibility test, it is considered a high HLB value dispersant and is blended with Span® 80 (HLB value from Griffin Method of 4.3 and available from Croda GmbH, [CAS 1338-43-8]).

| Blend number | Low HLB value surfactants | High HLB value surfactants |
|---|---|---|
| 1 | 100 wt.% surfactant to be tested / 0 wt.% Tween 20 | 100 wt.% Span 80 / 0 wt.% surfactant to be tested |
| 2 | 90 wt.% surfactant to be tested / 10 wt.% Tween 20 | 90 wt.% Span 80 / 10 wt.% surfactant to be tested |
| 3 | 80 wt.% surfactant to be tested / 20 wt.% Tween 20 | 80 wt.% Span 80 / 20 wt.% surfactant to be tested |
| 4 | 70 wt.% surfactant to be tested / 30 wt.% Tween 20 | 70 wt.% Span 80 / 30 wt.% surfactant to be tested |
| 5 | 60 wt.% surfactant to be tested / 40 wt.% Tween 20 | 60 wt.% Span 80 / 40 wt.% surfactant to be tested |
| 6 | 50 wt.% surfactant to be tested / 50 wt.% Tween 20 | 50 wt.% Span 80 / 50 wt.% surfactant to be tested |
| 7 | 40 wt.% surfactant to be tested / 60 wt.% Tween 20 | 40 wt.% Span 80 / 60 wt.% surfactant to be tested |
| 8 | 30 wt.% surfactant to be tested / 70 wt.% Tween 20 | 30 wt.% Span 80 / 70 wt.% surfactant to be tested |
| 9 | 20 wt.% surfactant to be tested / 80 wt.% Tween 20 | 20 wt.% Span 80 / 80 wt.% surfactant to be tested |
| 10 | 10 wt.% surfactant to be tested / 90 wt.% Tween 20 | 10 wt.% Span 80 / 90 wt.% surfactant to be tested |
| 11 | 0 wt.% surfactant to be tested / 100 wt.% Tween 20 | 0 wt.% Span 80 / 100 wt.% surfactant to be tested |

The emulsions each made with 10 mL of oil and 10 mL of deionized water added to a glass vial with a screw top lid. In each case, a 1 g sample of the blend of surfactants is added to the oil and water mixture. The closed vial containing the mixture is vigorously shaken for 25 seconds. The 25 second shaking is repeated 10 times at 10 minute intervals. After a 1 day interval the closed vial is again vigorously shaken for 25 seconds and the 25 second shaking is repeated 10 further times separated by 10 minute intervals. The stability of the emulsions is characterized by the height of the water component in the dispersions as measured with a ruler in centimetres. The stability is measured after 7 days from the last shaking. The two blends which produced the water component with smallest height are identified. Further blends at 2.5 wt. % increments are made and tested in the range between the two identified blends. The blend which yields the smallest height of the water component matches the required HLB of canola oil of 7. The effective HLB can be calculated from the weight ratio in the blend and the known HLB of the Span® 80 or Tween® 20 in the blend assuming the blend has a combined HLB of 7.

### Transport of solvent in an electrode

Ethanol is added to the carbon material powder to be tested until a homogeneous wetted mass is obtained (typical ratio carbon:ethanol 1:3 by weight). A suspension of 60 wt. % of PTFE in water (Purchased from Sigma Aldrich GmbH, CAS: 9002-84-0) is employed as binder. A minimum sufficient amount of binder is employed for forming a dough-like mass later (typically binder in the range 5-30% wt.% is required with respect to the carbon in the mixture). While mixing for one hour, the slurry will transform into a dough-like mass. The moist electrode is rolled out with a rolling pin to a layer thickness of 250 $\mu$m when wet, and dried for 12h at 120°C. If the dried electrode exhibits cracking, the test procedure must be restarted employing a higher content of binder.

An 8 mm $\times$ 15mm rectangle sample from the prepared dried electrode sheet is cut. A clip sample holder (SH0601 sample holder from Krüss GmbH) is used to hang the electrode sample. A force tensiometer K100 from Krüss GmbH is used in the contact angle measurement mode and using a glass vessel (SV20 from Krüss GmbH, diameter of 70 mm) containing 2-propanol CAS number 67-63-0). The measurement is controlled by the Krüss Laboratory Desktop software, Version 3.2.2.3068, provided by Krüss GmbH and performed at ambient temperature of 23°C. The sample is suspended above the solvent which is raised at a 6 mm/min rate to detect the surface of the liquid (sensitivity for detection is 0.01 g). The electrode sample is further dipped in the solvent by raising the solvent vessel at a rate of 3 mm/min. If the electrode bends or curls during the dipping procedure, the test is restarted with a new electrode sample. The mass is recorded every 0.2 mm from a depth of 1 mm to a final depth of 6 mm. The electrode sample is held at 6 mm depth for 45 seconds, after which the mass is again recorded. The electrode is removed from the solvent at a rate of 3 mm/min with data measurements every 0.2 mm. The mass of the absorbed solvent during the 45 hold at 6 mm is determined by subtraction. The measurement is repeated three times and the average solvent uptake mass is determined. The absorbed solvent mass is directly related to the transport efficiency in the electrode.

### Thermal gravimetric analysis (First TGA method)

The thermal gravimetric analysis was performed on the Netzsch TG 209F1 Libra thermal analyzer with Netzsch Proteus software. The TG209 standard sample holder and the standard type K thermocouple for sample temperature measurement were used. The typical initial sample mass was around 15-30 mg. No preconditioning steps were performed prior to the measurement. The mass of the sample, in an $Al_2O_3$ crucible, is recorded as the temperature in the measuring chamber is increased from 25°C to 1000°C at a heating rate of 15°C/min in a helium atmosphere (purity 5.0) at a flow of 20 cm$^3$/min. In order to correct for the change in buoyancy during the experiment, the apparent mass of an $Al_2O_3$ crucible filled with a similar volume of inert $Al_2O_3$ powder is recorded separately under comparable conditions, and is subtracted from the measured signal. The collected data is plotted as the measured remaining mass percent, determined by [{(sample mass at temperature T - apparent mass from buoyancy at temperature T) / initial sample mass} $\times$ 100] displayed in percent [%] (on the primary y-axis) and the sample temperature T from the thermocouple (on the secondary y-axis) as a function of time or alternatively the plots can have the temperature directly as the x-axis. The evolved gas is flown through a cold trap held at -50°C and injected every minute into the GC-MS (Agilent 7890, employing a Agilent 5975 mass sensitive detector). The column used was Agilent HP-5ms with capillary diameter of 0.25 $\mu$m. It was kept at 45°C during the measurement. Flow rate through the column was set to 2mL/min at a 10:1 split ratio (20mL/min gas flow from the TGA).

In order to also analyze the nonvolatile species collected in the cold trap, after concluding the TGA temperature ramp the cold trap was heated. The evolved species from the cold trap were fed into the GC-MS. Here, analysis was performed while heating the column from 45 °C to 300 °C at 10°C/min.

All GC-MS signals were identified by comparison with the NIST mass spectrometry database.

### Thermal gravimetric analysis (Second TGA method)

The thermal gravimetric analysis was performed on the Netzsch TG 209F1 Libra thermal analyzer with Netzsch Proteus software. The TG209 standard sample holder and the standard type K thermocouple for sample temperature measurement were used. The typical initial sample mass was around 15-30 mg. No preconditioning steps were performed prior to the measurement. The mass of the sample, in an $Al_2O_3$ crucible, is recorded as the temperature in the measuring chamber is increased from 25°C to 1000°C at a heating rate of 5°C/min in an argon atmosphere (purity 5.0) at a flow of 20 cm$^3$/min. In order to correct for the change in buoyancy during the experiment, the apparent mass of an $Al_2O_3$ crucible filled with a similar volume of inert $Al_2O_3$ powder is recorded separately under comparable conditions, and is subtracted from the measured signal. The collected data is plotted as the measured remaining mass percent, determined by

[{ (sample mass at temperature T - apparent mass from buoyancy at temperature T) / initial sample mass} $\times$ 100] displayed in percent [%] (on the primary y-axis) and the sample temperature T from the thermocouple (on the secondary y-axis) as a function of time or alternatively the plots can have the temperature directly as the x-axis.

Decomposition temperature determination of an amphiphile

Thermal gravimetric data were obtained according to the second TGA method herein. The decomposition temperature of the amphiphile is determined as the temperature at which the remaining mass of the sample is 40% of the initial mass.

Decomposition temperature determination of a graphitizable carbon source

Thermal gravimetric data were obtained according to the second TGA method herein. The decomposition temperature of the graphitizable carbon source is determined as the temperature at which the remaining mass of the sample is 90% of the initial mass.

Carbon yield determination of a carbon source

Thermal gravimetric data were obtained according to the second TGA method herein. The carbon yield is obtained as the residual mass (as a percent of the initial mass) after the system has reached 1000°C.

Solubility of carbon sources in solvent

To test the solubility of the carbon precursors or to check for the presence of a graphitizable carbon precursor within the formulation, a sample of 30 g of carbon precursor or of formulation and mix with 300 mL of 1.0 M NaOH prepared by dissolving 39.99 g NaOH (CAS: 1310-73-2) in 1.0 L deionized water. The mixture is placed in a 0.5 L PE-bottle and the mixture is stirred for 3 days on a roller mixer (RM5 W - 80V from CAT) at a speed of 80 min$^{-1}$. A non-graphitizable carbon precursor dissolves in the sodium hydroxide solution while a graphitizable carbon precursor does not dissolve. A graphitizable carbon source can be filtered out using a simple vacuum filtration system (1 L Buchner flask and 135 mL, 77 mm diameter Buchner funnel, white ribbon filter paper with 70 mm diameter). Additional 1.0 M NaOH can be used to wash the material on the filter paper. From the formulation, the graphitizable carbon source can be filtered out of the sodium hydroxide solution which contains the other components in the formulation. The presence of a non-graphitizable carbon source can be confirmed in the filtrate (200 mL) by neutralizing the solution with the addition of 20 mL of hydrochloric acid (32% HCL, CAS: 7647-01-0) which causes a precipitation of the non-graphitizable carbon source (precipitation results in two phases, but the resin phase is still highly viscous liquid).

X-ray crystallographic method for the determination of graphitic structure

Powder XRD (PXRD) is measured on a STOE&Cie. Stadi P powder diffractometer in transmission geometry, using focussed monochromatic Cu-Kalpha1 radiation (Generator 40kV, 30mA) from the curved Ge-111 monochromator with lambda=1.45056 Angstrom. Several mg of sample material are finely ground in an agate mortar, prepared between cellophane sheets using white glue, and mounted in the standard STOE transmission sample holder. The STOE IPPSD detector is used. Samples are rotated in plane in the transmission sample holder at 50-150 rpm. Data is collected using the STOE WinXPow software, in a 2theta range from 8 to 84 degrees. Data is collected for 8800 seconds. 2theta step width is 0.015 degrees. For analysis, the count rate at each 2theta step is normalized by setting the highest measured count rate $I_0$ to 100%. The relative intensity $I / I_0$ x 100% is plotted vs. the 2theta angle. Alternatively, absolute intensities (count rates) can be plotted vs. the 2theta angle. The presence of graphitic domains is observed as a visible sharp peak at 2Theta angle in the range from 26 to 27°, preferably at around 26.5°. Amorphous materials show no sharp features, only broad features indicative of no appreciable crystal structure in the material.

For determining the presence of a graphitizable carbon source, a sample is held at 3000°C for 1 hour under argon at 500 Pa and the resultant material is tested for graphitic carbon structure. The 500 Pa argon atmosphere is preferably established after flushing three times with argon. To establish whether a constituent itself is graphitizable, it is tested in isolation from other constituents.

Softening point

Softening point is determined according to the ISO D3104 - 14a "Softening Point of Pitches (Mettler Softening Point Method)" as reapproved in 2018. The "new instrument" method is employed.

## Summary of the figures

The invention is now further elucidated with reference to the figures. The figures and figure descriptions are exemplary and are not to be considered as limiting the scope of the invention.

Figure 1 shows a schematic representation of a process for preparing a porous carbon material.
Figure 2 shows a scanning electron images of high magnification of example 1.
Figure 3 shows a scanning electron images of example 1.
Figure 4 shows the pore size distribution of example 1.
Figure 5 shows the pore size distribution of example 2.
Figure 6 shows the pore size distribution of example 3.
Figure 7 shows an exemplary TGA profile for an amphiphilic species.
Figure 8 shows an exemplary TGA profile for coal-tar pitch.
Figure 9 shows an exemplary TGA profile for phenol formaldehyde resin.
Figure 10 shows an exemplary XRD profile for a graphitizable carbon source after treatment at 3000°C for 1 h.
Figure 11 shows an exemplary XRD profile for two non-graphitizable carbon sources after treatment at 3000°C for 1 h.

## Description of the Figures

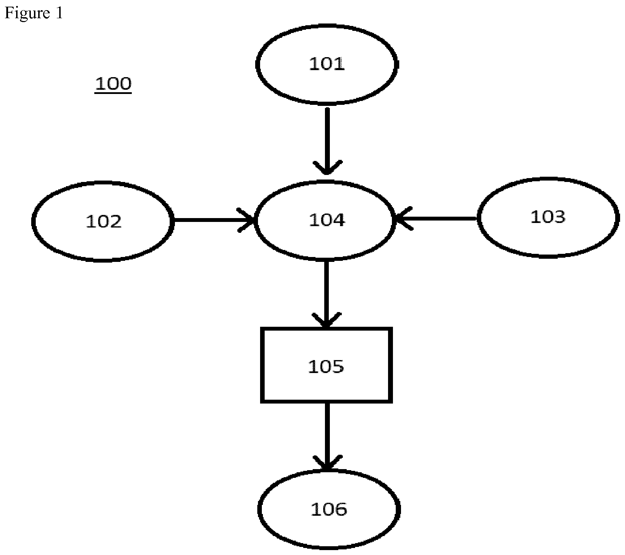

Figure 1 shows a process 100 for preparing a porous carbon material 106. A non-graphitizable carbon source 101, in this case Novolac-type resorcinol/formaldehyde resin (Askofen 779 W 50), dispersed in water (50% resin content); an amphiphilic species 102, in this case Synperonic PE/F127 (nonionic high HLB emulsifier); a graphitizable carbon source 103, in this case ZL-250M pitch; and optionally other constituents, in this case no other constituents and in particular no cross-linking agent; are contacted thereby obtaining a formulation 104. A heating step 105 is performed to obtain a porous carbon material 106 from the formulation 104.

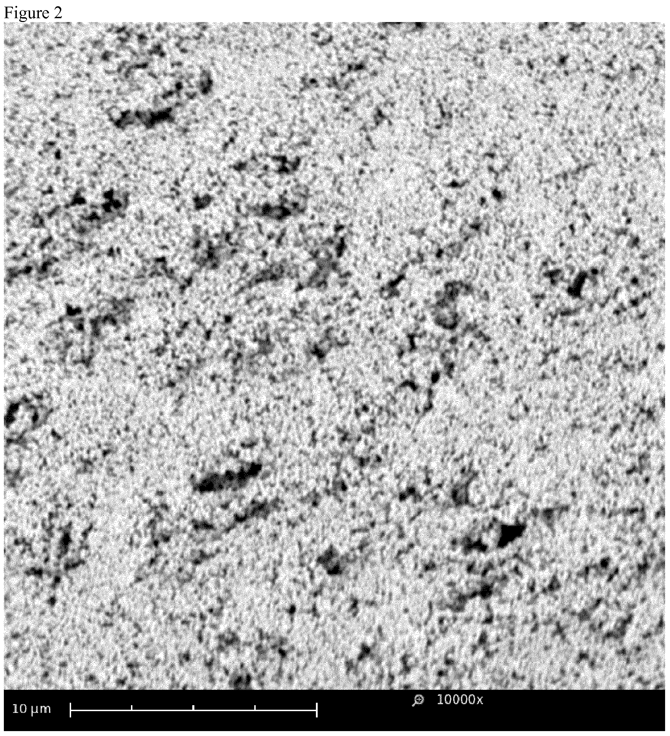

Figure 2 shows a scanning electron images of high magnification of example 1 showing the porous nature of the material produced.

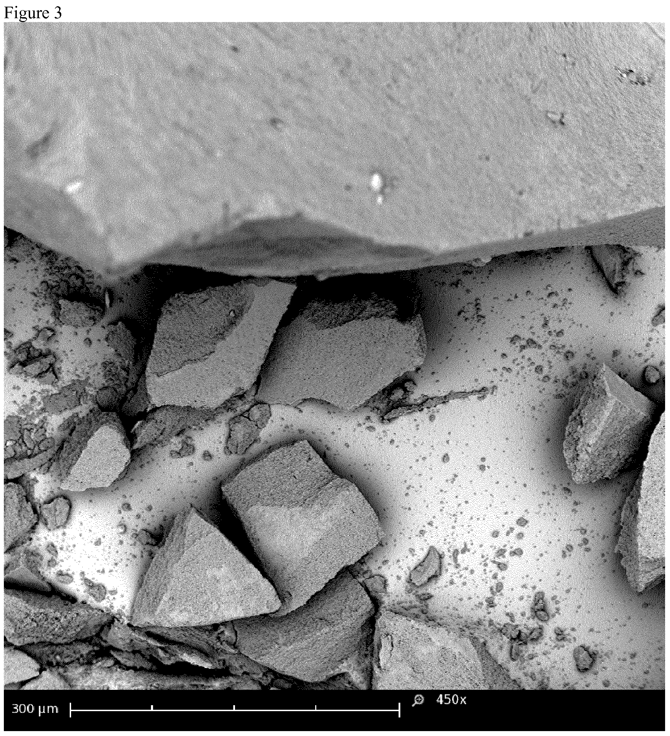

Figure 3 shows a scanning electron images of example 1 showing the porous nature of the material produced. This image, at lower magnification shows the homogeneity of the material.

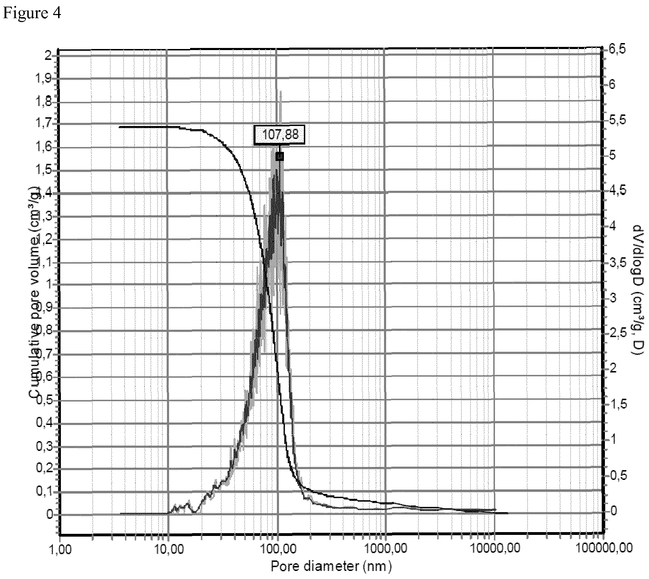

Figure 4 shows the pore size distribution of example 1 as obtained by Hg porosimetry showing the high pore volume of ca. 1.7 $cm^3$/g and the pore diameters in the small macroporous range.

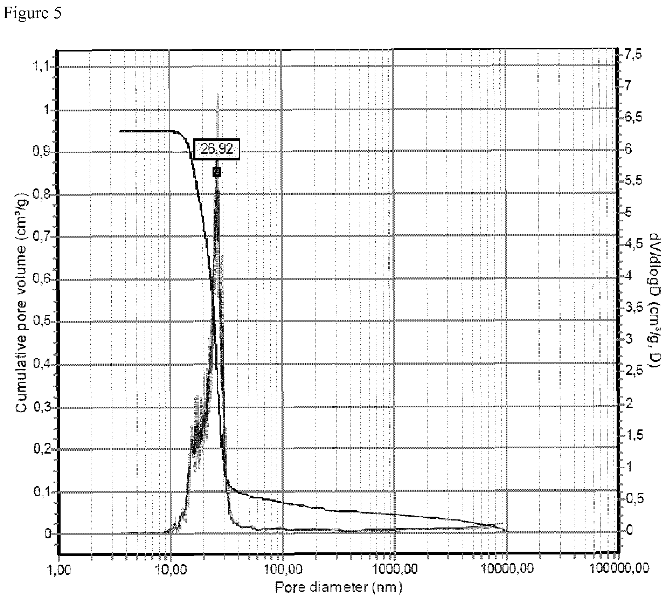

Figure 5 shows the pore size distribution of example 2 as obtained by Hg porosimetry showing the pore volume of ca. 0.9 $cm^3$/g.

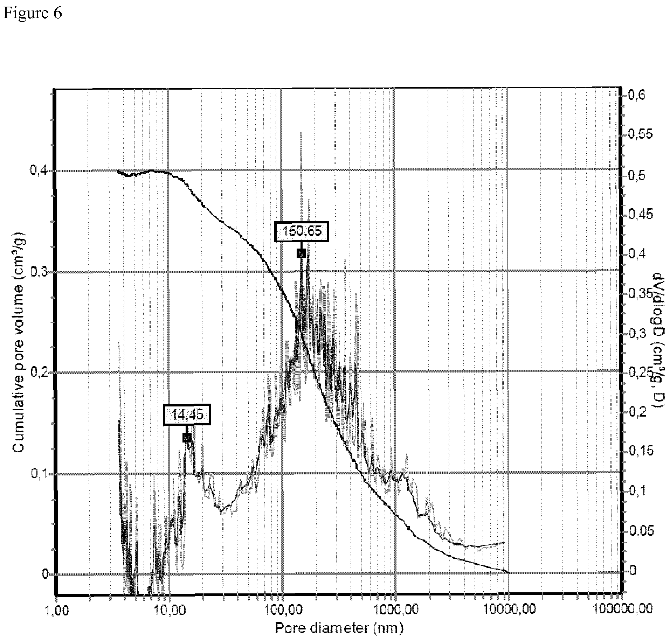

Figure 6 the pore size distribution of example 3 as obtained by Hg porosimetry showing the pore volume of ca. 0.4 $cm^3$/g.

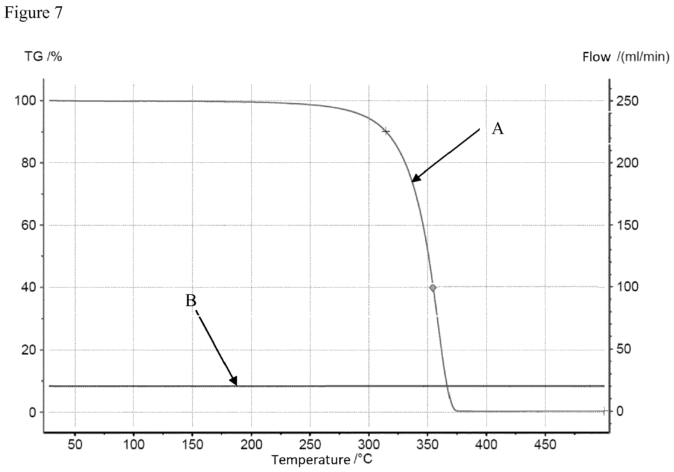

Figure 7 shows an exemplary TGA profile for an amphiphilic species. Decomposition commences around 300°C and a residual mass of 40 wt. % is achieved at around 355°C. Residual mass is presented as curve A. Flow rate is presented as curve B.

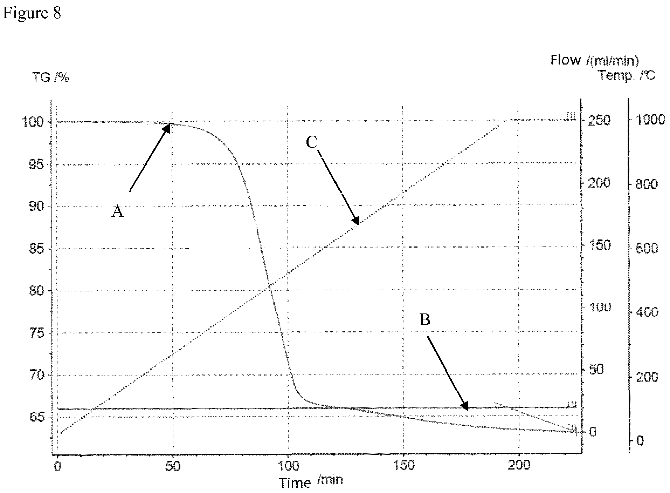

Figure 8 shows an exemplary TGA profile for coal-tar pitch. A feature is observed between around 300°C and 600°C. A residual mass of 63% is observed at 1000°C. Residual mass is presented as curve A. Flow rate is presented as curve B. Temperature is presented as curve C.

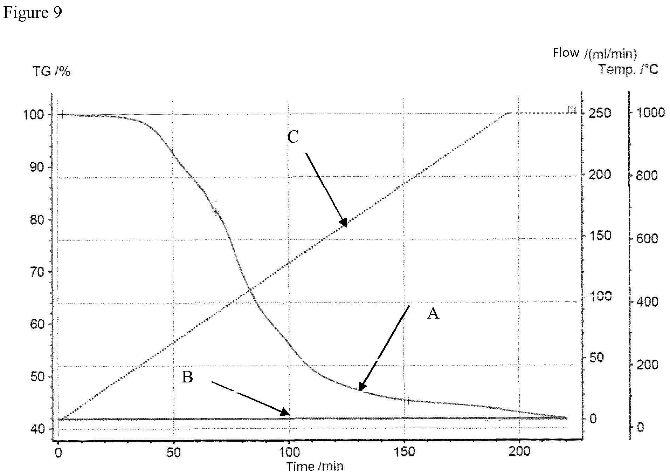

Figure 9 shows an exemplary TGA profile for phenol formaldehyde resin. A feature is observed starting at around 200°C. A residual mass of 41.6% is observed at 1000°C. Residual mass is presented as curve A. Flow rate is presented as curve B. Temperature is presented as curve C.

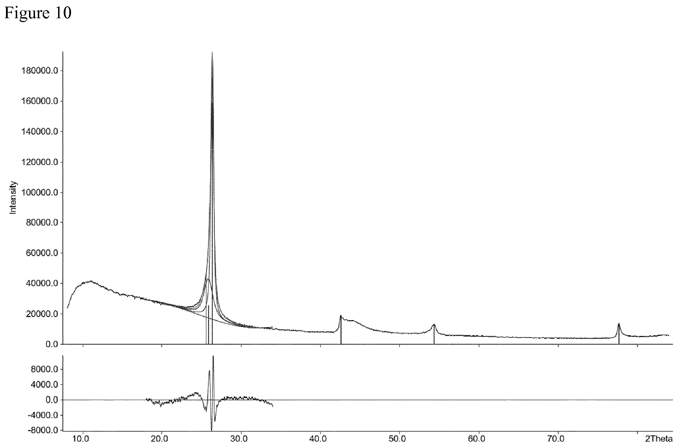

Figure 10 shows an exemplary XRD profile for a graphitizable carbon source treated to 3000°C for 1 h. A characteristic feature is observed for 2theta between 26 and 27 (around 26.5).

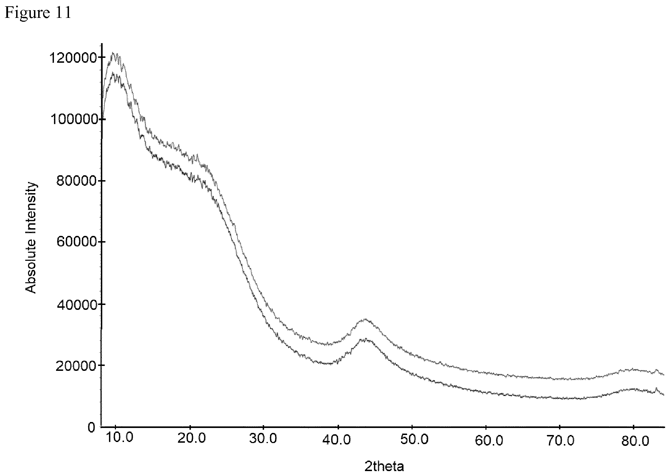

Figure 11 shows an exemplary XRD profile for two non-graphitizable carbon sources treated to 3000°C for 1 h. No characteristic sharp feature is observed in either spectra for 2theta between 26 and 27 (around 26.5).

## Examples

The invention is now further elucidated with the aid of examples. These examples are for illustrative purposes and are not to be considered as limiting the scope of the invention. Commercial sources for materials employed are presented in table 0.

## Example 1

10 parts of Askofen 779 W 50 was mixed with 0.25 parts of ZL-250M pitch and 6 parts of Genapol PF20, and held at 900°C in nitrogen atmosphere for 3 hours. A porous carbon material formed with a $BET_{external} = BET_{total} - BET_{micropore}$ of 146 m$^2$/g and a $BET_{micropore}$ of 437 m$^2$/g. The example was repeated without the pitch and the resultant material had a $BET_{external} = BET_{total} - BET_{micropore}$ of 90 m$^2$/g and a $BET_{micropore}$ of 550 m$^2$/g.

Example 2

10 parts Askofen 779 W 50 was combined with 0.25 parts ZL-250M pitch and 12 parts triblock copolymer PEO-PPO-PEO with MN 5800 and held at 900°C in nitrogen atmosphere for 3 hours. A porous carbon material formed.

Example 3

10 parts Alnovol PN320 was combined with 1 parts hexamethylenetetramine, 5 parts ZL-250M pitch and 10 parts triblock copolymer PEO-PPO-PEO with MN 2000 and held at 900°C in nitrogen atmosphere for 3 hours. A porous carbon material formed with a $BET_{external} = BET_{total} - BET_{micropore}$ of 67 m$^2$/g and a $BET_{micropore}$ of 236 m$^2$/g. The example was repeated without the pitch and the resultant material had a $BET_{micropore} = BET_{total} - BET_{micropore}$ of 69 m$^2$/g and a $BET_{micropore}$ of 321 m$^2$/g.

Example 4

Alnovol PN320 was combined with ZL-250M pitch and triblock copolymer PEO-PPO-PEO with MN 5800 in proportions shown in table 1. The mixture was held at 900°C in nitrogen atmosphere for 3 hours. The resultant materials were crushed, formed into a slurry using a rotor-stator mixer (Primix Filmix40 available from Buehler AG, Switzerland) along with NMC-111 active material (commercially available as MX8 from Umicore NV, Belgium), a binder (Kynar HSV900, commercially available from Arkema SA, France) and N-methyl pyrrolidone solvent, and then processed into electrodes for Li-ion batteries. Properties of the resultant Li-ion batteries are presented in the table.

Example 5

10 parts Tanex 20 (hydrolysable tannic acid) was combined with 1.33 parts ZL-250M pitch and 10 parts Synperonic PE/F127 and held at 900°C in nitrogen atmosphere for 3 hours. A porous carbon material formed.

Table 0

| Material | Description | Commercial provider |
|---|---|---|
| Askofen 779 W 50 | Resorcinol-formaldehyde Novolac resin aqueous dispersion with 50% resin content | ASK Chemicals GmbH, Hilden, DE |
| Alnovol PN320 | Phenolic- formaldehyde Novolac resin, pellet | Allnex GmbH, Wiesbaden, DE |
| Tanex 20 | Hydrolysable gallo-tannic acid | SA Ajinomoto Omni-Chem NV, NL |
| Genapol PF20 | Amphiphile, emulsifier | Clariant GmbH, Frankfurt, DE |
| PEO-PPO-PEO with Mn 5800 (CAS Number: 9003-11-6) | Amphiphile, surfactant | Purchased from Sigma Aldrich GmbH |
| PEO-PPO-PEO with Mn 2000 (CAS Number: 9003-11-6) | Amphiphile, surfactant | Purchased from Sigma Aldrich GmbH |
| Synperonic PE/F127 | Amphiphile, surfactant | Croda GmbH, DE |
| ZL-250M | Petroleum pitch, milled to d90: below 20 μm | Rütgers Germany GmbH, Castrop-Rauxel, DE |
| Hexamethylenetetramine (CAS Number: 100-97-0) | Cross-linker | Purchased from Sigma Aldrich GmbH |

Table 1

| Ex. | Pitch [parts] | Solid resin [parts] | Amphiphile [parts] | Effect in Li-ion battery | Effect for slurry preparation | Effect for electrode manufacturing |
|---|---|---|---|---|---|---|
| 4a | 4 | 53 | 43 | High first cycle loss. Low energy density | Increased solvent uptake | Lowered active material content for the final electrode |
| 4b | 24 | 42 | 34 | low high-rate response | More difficult to mix | higher rejection rate due to inhomogeneities. More difficult to calendar. More difficult to dry |
| 4c | 2 | 35 | 63 | high first cycle losses, material breaks up during processing, low high-rate capability | Increased solvent uptake lowered energy density in electrode | More difficult to calendar |
| 4d | 17 | 30 | 54 | low high-rate response | More difficult to mix | higher rejection rate due to inhomogeneity. More difficult to calendar |
| 4e | 12 | 45 | 40 | Good low-rate and high-rate response. Low first cycle loss. Good energy density | Limited solvent uptake. Easy mixing | Good processing and homogeneity, high electrode density |
| 4f | 7 | 50 | 41 | Good low-rate and high-rate response. Low first cycle loss. Good energy density | Limited solvent uptake. Easy mixing and stable slurry | Good processing and homogeneity, good calendaring properties |
| 4g | 15 | 58 | 55 | Good low-rate and high-rate response. Low first cycle loss. Good energy density, good electrode conductivity | Limited solvent uptake. Easy mixing and stable slurry | Good processing and homogeneity, high electrode density |
| 4h | 6 | 35 | 42 | Good low-rate and high-rate response. Low first cycle loss. Good energy density | Limited solvent uptake. Easy mix-ing and stable slurry | Good processing and homogeneity, good calen-daring properties |
| 4i | 10 | 35 | 35 | Good low-rate and high-rate response. Low first cycle loss. Good energy density, good electrode conductivity | Limited solvent uptake. Easy mixing and stable slurry | Good processing and homogeneity, good calendaring properties |

Reference list

100    Process for the preparation of a porous carbon material
101    Non-graphitizable carbon source
102    Amphiphilic species
103    Graphitizable carbon source
104    Formulation
105    Heating step
106    Porous carbon material

**Claims**

1. A formulation comprising:

    a. A graphitizable carbon source;
    b. A non-graphitizable carbon source; and
    c. An amphiphilic species.

2. The formulation according to claim 1, wherein the content of the graphitizable carbon source is in the range from 1 to 30 wt. %, based on the total weight of the formulation.

3. The formulation according to claim 1 or 2, wherein the content of the non-graphitizable carbon source is in the range from 20 to 60 wt. %, based on the total weight of the formulation.

4. The formulation according to any of the preceding claims, wherein the amphiphilic species is in the range from 18 to 70 wt. %, based on the total weight of the formulation.

5. The formulation according to any of the preceding claims, wherein the ratio by weight of the non-graphitizable carbon source to the graphitizable carbon source is in the range from 5:0.35 to 5:2.8.

6. The formulation according to any of the preceding claims, wherein the formulation does not contain a cross-linking agent.

7. The formulation according to any of the preceding claims, wherein the non-graphitizable carbon source comprises a molecule having two or more OH groups.

8. The formulation according to any of the preceding claims, wherein the non-graphitizable carbon source comprises one or more selected from the group consisting of: a sugar and a species comprising two or more phenolic structural units per molecule.

9. The formulation according to any of the preceding claims, wherein the non-graphitizable carbon source comprises a phenolic resin.

10. The formulation according to any of the claims 1 to 8, wherein the non-graphitizable carbon source comprises a polyphenol.

11. The formulation according to any of the preceding claims, wherein the graphitizable carbon source comprises one or more selected from the group consisting of: naphthol and mesophase pitch, coal tar pitch, petroleum pitch, coke, anthracene, bitumen.

12. The formulation according to any of the preceding claims, wherein the amphiphilic species comprises a molecule comprising two or more adjacent ethylene oxide based repeating units.

13. The formulation according to any of the preceding claims, wherein the amphiphilic species is a block copolymer.

14. A process for the preparation of a porous carbon material, the process comprising the following steps:

    a. Providing a formulation according to any of the preceding claims;
    b. Heating the formulation to obtain the porous carbon material.

15. A porous carbon material obtainable by the process of any claim 14.

16. A device comprising the porous carbon material according to claim 15.

17. A use of a mixture of a graphitizable carbon source and a non-graphitizable carbon for preparing a porous carbon material.

Figure 1

Figure 2

10 µm   10000x

Figure 3

Figure 4

Figure 5

Figure 6

Figure 7

Figure 8

Figure 9

Figure 10

Figure 11

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 476 475 A1 (HERAEUS BATTERY TECH GMBH [DE]) 1 May 2019 (2019-05-01) * paragraphs [0001] - [0117] * | 15-17 | INV. C01B32/00 C01B32/05 H01M4/583 |
| X | US 6 146 611 A (DILLON FRANK [US] ET AL) 14 November 2000 (2000-11-14) * column 2, line 18 - column 5 * * table chart A * | 1-17 | |
| X | US 2016/289077 A1 (NEUMANN CHRISTIAN [DE] ET AL) 6 October 2016 (2016-10-06) * paragraphs [0011] - [0087] * | 15-17 | |
| X | US 2007/090047 A1 (BELL DAVID A [GB] ET AL) 26 April 2007 (2007-04-26) * paragraphs [0012] - [0090] * | 15-17 | |
| X | JP 2017 193474 A (UNIV OSAKA) 26 October 2017 (2017-10-26) * abstract * * paragraphs [0001] - [0049] * | 15,16 | |
| X | US 2015/284252 A1 (KARTHIK MANI [ES] ET AL) 8 October 2015 (2015-10-08) * paragraphs [0038] - [0165] * * examples 1-3 * | 15,16 | TECHNICAL FIELDS SEARCHED (IPC) C01B H01M |

The present search report has been drawn up for all claims

| Place of search | Date of completion of the search | Examiner |
|---|---|---|
| The Hague | 15 October 2019 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 1966

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | | Publication date | Patent family member(s) | | Publication date |
|---|---|---|---|---|---|
| EP 3476475 | A1 | 01-05-2019 | CN | 109795999 A | 24-05-2019 |
| | | | EP | 3476475 A1 | 01-05-2019 |
| | | | JP | 2019083189 A | 30-05-2019 |
| | | | KR | 20190047622 A | 08-05-2019 |
| | | | US | 2019127226 A1 | 02-05-2019 |
| US 6146611 | A | 14-11-2000 | AU | 6128999 A | 05-01-2000 |
| | | | CN | 1310697 A | 29-08-2001 |
| | | | EP | 1084089 A2 | 21-03-2001 |
| | | | JP | 2002518285 A | 25-06-2002 |
| | | | US | 6126874 A | 03-10-2000 |
| | | | US | 6146611 A | 14-11-2000 |
| | | | WO | 9965843 A2 | 23-12-1999 |
| US 2016289077 | A1 | 06-10-2016 | CN | 105531241 A | 27-04-2016 |
| | | | DE | 102013110453 A1 | 26-03-2015 |
| | | | EP | 3046891 A1 | 27-07-2016 |
| | | | JP | 6440693 B2 | 19-12-2018 |
| | | | JP | 2016531818 A | 13-10-2016 |
| | | | KR | 20160060108 A | 27-05-2016 |
| | | | US | 2016289077 A1 | 06-10-2016 |
| | | | WO | 2015040186 A1 | 26-03-2015 |
| US 2007090047 | A1 | 26-04-2007 | AR | 030494 A1 | 20-08-2003 |
| | | | AT | 257753 T | 15-01-2004 |
| | | | AU | 8235501 A | 13-03-2002 |
| | | | AU | 2001282355 B2 | 10-03-2005 |
| | | | BR | 0112344 A | 01-07-2003 |
| | | | CA | 2413496 A1 | 07-03-2002 |
| | | | CN | 1449312 A | 15-10-2003 |
| | | | CZ | 300723 B6 | 29-07-2009 |
| | | | DE | 60101793 T2 | 25-11-2004 |
| | | | DK | 1282477 T3 | 26-04-2004 |
| | | | EP | 1282477 A1 | 12-02-2003 |
| | | | ES | 2214439 T3 | 16-09-2004 |
| | | | KR | 20030059081 A | 07-07-2003 |
| | | | MY | 138532 A | 30-06-2009 |
| | | | PL | 361156 A1 | 20-09-2004 |
| | | | PT | 1282477 E | 31-05-2004 |
| | | | SK | 17282002 A3 | 05-08-2003 |
| | | | TR | 200400114 T4 | 23-02-2004 |
| | | | TW | I227221 B | 01-02-2005 |
| | | | US | 2004128857 A1 | 08-07-2004 |
| | | | US | 2006264315 A1 | 23-11-2006 |
| | | | US | 2007090047 A1 | 26-04-2007 |
| | | | US | 2009123645 A1 | 14-05-2009 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 19 17 1966

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | Publication date | Patent family member(s) | Publication date |
|---|---|---|---|
| | | WO 0218075 A1 | 07-03-2002 |
| JP 2017193474 A | 26-10-2017 | NONE | |
| US 2015284252 A1 | 08-10-2015 | EP 2909134 A1<br>ES 2636614 T3<br>US 2015284252 A1<br>WO 2014060508 A1 | 26-08-2015<br>06-10-2017<br>08-10-2015<br>24-04-2014 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7655209 B2
- US 6514454 B1
- US 2005214539 A1
- EP 2899158 B1

**Non-patent literature cited in the description**

- *Carbon,* 1982, vol. 20 (5), 445-449
- **GUO et al.** *Journal of Colloid and Interface Science,* 2006, vol. 298, 441-450
- **S. M. WEIDNER et al.** *Rapid Commun. Mass Spectrom.,* 2007, vol. 21, 2750-2758
- *CHEMICAL ABSTRACTS,* 120962-03-0
- *CHEMICAL ABSTRACTS,* 9005-64-5
- *CHEMICAL ABSTRACTS,* 1338-43-8
- *CHEMICAL ABSTRACTS,* 9002-84-0
- *CHEMICAL ABSTRACTS,* 67-63-0
- *CHEMICAL ABSTRACTS,* 1310-73-2
- *CHEMICAL ABSTRACTS,* 7647-01-0
- *CHEMICAL ABSTRACTS,* 9003-11-6
- *CHEMICAL ABSTRACTS,* 100-97-0